# EUROPÄISCHE PATENTSCHRIFT

(11) **EP 1 210 785 B1**
(45) Veröffentlichungstag und Bekanntmachung des Hinweises auf die Patenterteilung: **23.11.2005**
(21) Anmeldenummer: 00965830.3
(22) Anmeldetag: 05.09.2000
(51) Int. Cl.: H04J 14/06

(54) **ANORDNUNG UND VERFAHREN FÜR EINE OPTISCHE INFORMATIONSÜBERTRAGUNG**
DEVICE AND METHOD FOR OPTICAL TRANSMISSION OF INFORMATION
DISPOSITIF ET PROCEDE DE TRANSMISSION OPTIQUE D'INFORMATIONS

(30) Priorität: 08.09.1999 DE 19942936; 10.04.2000 DE 10017516; 20.04.2000 DE 10019932
(43) Veröffentlichungstag der Anmeldung: 05.06.2002
(73) Patentinhaber: SIEMENS AKTIENGESELLSCHAFT, 80333 München (DE)
(72) Erfinder: NOE, Reinhold, 33100 Paderborn (DE)
(86) Internationale Anmeldenummer: PCT/DE2000/003066
(87) Internationale Veröffentlichungsnummer: WO 2001/019009

(56) Entgegenhaltungen:
- EP-A- 0 564 167
- US-A- 5 062 153
- HEISMANN F ET AL: "AUTOMATIC POLARIZATION DEMULTIPLEXER FOR POLARIZATION-MULTIPLEXED TRANSMISSION SYSTEMS" PROCEEDINGS OF THE EUROPEAN CONFERENCE ON OPTICAL COMMUNICATION (ECOC),CH,ZURICH, SEV, Bd. CONF. 19, 12. September 1993 (1993-09-12), Seiten 401-404, XP000492247 in der Anmeldung erwähnt

## Beschreibung

Die Erfindung betrifft eine Anordnung sowie ein dazugehöriges Verfahren für die optische Informationsübertragung nach dem Oberbegriff der unabhängigen Patentansprüche 1 und 16.

Polarisationsmultiplex, eine Anordnung sowie ein Verfahren für die optische Informationsübertragung mittels verschieden polarisierten optischen Teilsignalen, wird zur Erhöhung der Kapazität eines optischen Übertragungssystems verwendet.
Im Tagungsband der European Conference on Optical Communications 1993, Montreux, Schweiz, S. 401-404, Beitrag WeP9.3, F. Heismann et al., "Automatic Polarization Demultiplexer for Polarization-Multiplexed Transmission Systems" ist ein optisches Polarisationsmultiplex-Übertragungsystem beschrieben. Ein wesentlicher Nachteil in dieser Ausgestaltung einer ist die Einregelung eines empfängerseitigen Polarisationstransformators derart, daß die beiden Polarisationsmultiplex-Kanäle auf die beiden Ausgänge eines nachgeschalteten Polarisationsstrahlteilers aufgeteilt werden. Dazu wird ein Korrelationssignal des wiedergewonnenen Taktes mit dem empfangenen Signal gebildet und dieses wird durch Einstellung des Polarisationstransformators maximiert.
Die Vorgehensweise gemäß dem Stand der Technik hat mehrere Nachteile:

Zunächst verschwindet das Korrelationsprodukt bei Vorgabe einer reinen, wechselspannungsgekoppelten Pseudozufallsfolge im zeitlichen Mittel, was die Regelung schwierig oder unmöglich macht.

Zur Unterscheidung der beiden Polarisationsmultiplex-Kanäle mußten außerdem verschiedene Bitraten gewählt werden, was in der Praxis nicht gestattet ist. Auch mußten deutlich verschiedene optische Wellenlängen gewählt werden, was ebenfalls in der Praxis unzulässig ist.

Aufgabe der Erfindung ist es daher, eine Anordnung sowie ein dazugehöriges Verfahren für die optische Informationsübertragung anzugeben, welche die Nachteile des Standes der Technik vermeiden.

Diese Aufgabe wird durch eine in Anspruch 1 angegebene Anordnung sowie durch ein im Patentanspruch 16 angegebenes Verfahren gelöst.

Vorteilhafte Weiterbildungen sind in den Unteransprüchen angegeben.

Die Lösung des Problems liegt darin, daß eine auftretende Interferenz der beiden optischen, verschieden polarisierten Polarisationsmultiplexsignale in einem Signalverarbeitungsmodul detektiert wird und zur Steuerung eines steuerbaren polarisierenden Elementes dient. Dazu kann diese Interferenz sendeseitig konditioniert, d.h. randomisiert werden. Entsprechende spektrale Teilsignale werden durch Polarisationsregler minimiert, so daß Nebensprechen bei Polarisationsmultiplex minimiert und gleichzeitig die Nutzsignale wenigstens näherungsweise maximiert werden. Alle genannten Nachteile des Standes der Technik werden dabei vermieden.

In einem Ausführungsbeispiel der Erfindung wird das Polarisationsmultiplexsignal sendeseitig aus einem Lasersignal erzeugt, welches zunächst auf zwei Signalzweige aufgeteilt wird und dort jeweils getrennt intensitätsmoduliert wird. Diese Signalzweige werden anschließend in einem Polarisationsstrahlteiler mit orthogonalen Polarisationen zusammengeführt. Gleichzeitig wird die Frequenz des Lasers moduliert. Durch eine Laufzeitdifferenz dieser Zweige führt die Frequenzmodulation zu einer differentiellen Phasenmodulation zwischen den Multiplexsignalen.

Empfängerseitig wird das Signal mit einem Koppler auf zwei Empfängerzweige aufgeteilt. In jedem Empfängerzweig folgt eine eingangsseitige Polarisationsregelung, ein Polarisator zur Unterdrückung des jeweils unerwünschten Polarisationsmultiplexkanals und ein konventioneller Photoempfänger mit je einer Photodiode und schließlich den Photodioden nachgeschalteten elektrischen Datensignalregeneratoren Mittels je eines Filters werden spektrale Teilsignale detektiert. Diese verschwinden nur dann, wenn eines der Multiplexsignale vom Polarisator vollständig unterdrückt wird. Dadurch ergibt sich ein einfaches und gleichzeitig hochwirksames Regelkriterium zur Einstellung des jeweiligen Polarisationstransformators. In diesem Fall empfängt und regeneriert jeder der Regeneratoren nur einen Polarisationsmultiplex-Kanal, was der gewünschten empfängerseitigen Trennung der Signale entspricht.
In einer Weiterbildung wird vor Erreichen des Filters vorzugsweise mit der zeitlichen Ableitung des wiedergewonnenen Datensignals des jeweils anderen Kanals korreliert. Auf diese Weise gewinnt man ein hochgenaues Regelkriterium zur Kompensation von Polarisationsmodendispersion.

Die Erfindung wird anhand von Ausführungsbeispielen näher erläutert.

Es zeigen
- Figur 1: einen Polarisationsmultiplex-Sender mit nur einem Laser,
- Figur 2: einen Polarisationsmultiplex-Sender mit zwei Lasern,
- Figur 3: einen erfindungsgemäßen Empfänger,
- Figur 4: einen Separator/Detektor,
- Figur 5: eine Variante eines Teils der Figur 3,
- Figur 6: ein Vektordiagramm linearer Polarisationszustände,
- Figur 7: eine Ausführungsvariante eines Separators/Detektors,
- Figur 8: eine Ausführungsvariante einer Filtereinheit,
- Figur 9: eine weitere Ausführungsvariante einer Filtereinheit,
- Figur 10: einen weiteren erfindungsgemäßen Empfänger,
- Figur 11: eine Variante eines Teils der Figur 10,
- Figur 12: ein korrelierendes Element,
- Figur 13: eine vorteilhafte Ausgestaltung des korrelierenden Elements,
- Figur 14: ein weiteres korrelierendes Element.

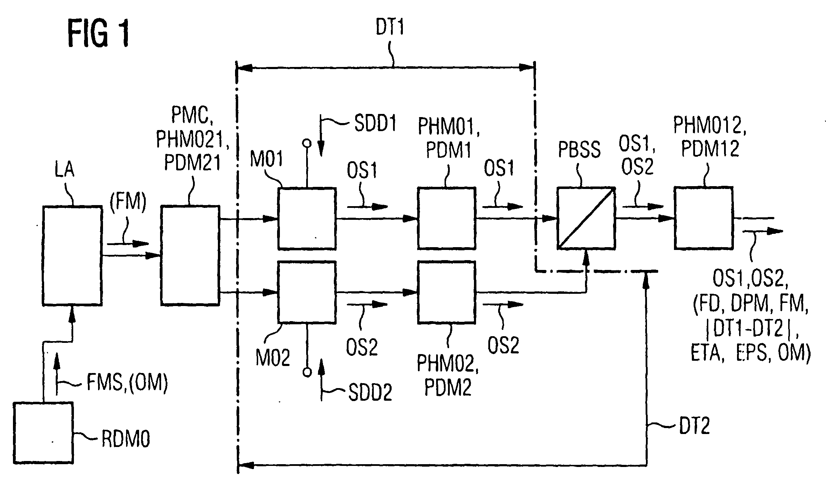

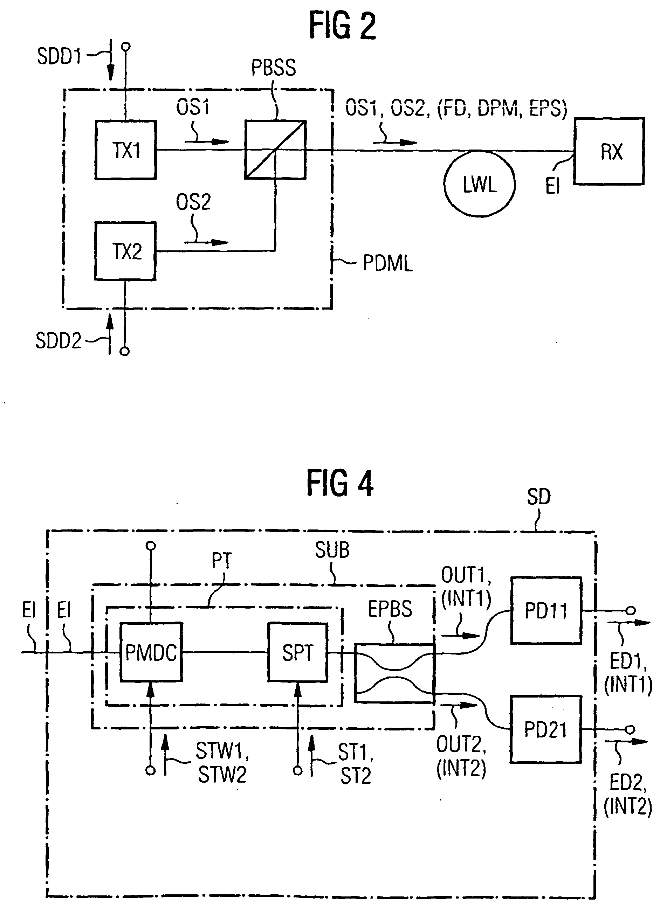

In einer Sendeanordnung gemäß **Figur 1** wird das Ausgangssignal eines Sendelasers LA durch einen sendeseitigen Leistungsteiler PMC mit etwa gleichen Leistungen auf zwei Lichtwellenleiter aufgeteilt. Ggf. notwendige optische und/oder elektrische Verstärker sind hier und in den folgende Figuren der Übersichtlichkeit halber nicht dargestellt. Der sendeseitige Leistungsteiler PMC kann z.B. ein polarisationserhaltender Faserkoppler sein. Die so gewonnenen Signale werden durch je einen Modulator MO1, M02 geleitet, welcher bevorzugt als Intensitätsmodulator, oder aber z.B. als Phasenmodulator ausgebildet ist und wo sendeseitige Modulationssignale SDD1 bzw. SDD2 aufgeprägt und so optische Teilsignale OS1, OS2 geschaffen werden. Diese sind moduliert. OS1 ist ein erstes und OS2 ist ein zweites optisches Teilsignal. Diese werden durch einen sendeseitigen Polarisationsstrahlteiler PBSS mit vorzugsweise orthogonalen Polarisationen kombiniert. Statt des sendeseitigen Polarisationsstrahlteilers PBSS kann auch ein einfacher optischer Richtkoppler verwendet werden.
Für die Verbindungen zwischen den Modulatoren MO1, M02 und dem sendeseitigen Polarisationsstrahlteiler PBSS können z.B. ebenfalls polarisationserhaltende Lichtwellenleiter vorgesehen werden, von denen einer um 90° tordiert ist. Alternativ dazu kann in einer dieser Verbindungen ein Modenwandler vorgesehen werden.
Um eine gewünschte Kohärenz der optischen Teilsignale OS1, OS2 nach der Kombinierung zu erzielen, ist eine differentielle Phasenmodulation DPM zwischen diesen beiden optischen Teilsignalen OS1, OS2 vorhanden, welche von einem phasendifferenzmodulierenden Mittel erzeugt wird. Erste phasendifferenzmodulierende Mittel PDM1, PDM2, PDM12, PDM21, die alternativ oder additiv eingesetzt werden können, sind Winkelmodulatoren PHMO1, PHMO2 eines der optischen Signale OS1, OS2 oder differentielle Winkelmodulatoren PHMO12, PHMO21. Differentiell bedeutet dabei, daß die Winkelmodulation zwischen den im Idealfall orthogonal zueinander polarisierten optischen Teilsignalen OS1, OS2 wirksam ist. Im Fall einer dabei erzeugten Frequenzverschiebung ist im Ausgangslichtwellenleiter eine Frequenzdifferenz FD vorhanden. Frequenzverschieber, auch differentielle, die sich zur Realisierung dieser ersten phasendifferenzmodulierenden Mittel PDM1, PDM2, PDM12, PDM21 eignen, können insbesondere akustooptisch oder elektrooptisch arbeiten, im Fall der nicht gleichzeitig einer Leistungsteilung dienenden phasendifferenzmodulierenden Mittel PDM1, PDM2, PDM12 vorzugsweise mit voller Modenkonversion. Auch ein sendeseitiger Leistungsteiler PMC kann als phasendifferenzmodulierendes Mittel PDM21 dienen, beispielsweise bei Realisierung durch einen als Frequenzverschieber arbeitenden akustooptischen Modenkonverter mit hälftiger Leistungskonversion, der von einem Polarisationsstrahlteiler gefolgt wird. In einem weiteren Ausführungsbeispiel eines Polarisationsmultiplex-Senders wird der Sendelaser LA mit einem optischen Frequenzmodulationssignal FMS beaufschlagt, das aus einem weiteren phasendifferenzmodulierenden Mittel PDM0 bereitgestellt wird. Beispielsweise wirkt sich eine sinusförmige optische Frequenzmodulation FM mit einem Hub von einigen 100 MHz kaum auf die Sendebandbreite eines 10Gb/s-Senders aus. Durch einen von Null verschieden gewählten Laufzeitdifferenzbetrag |DT1-DT2| zwischen den optischen Laufzeiten DT1, DT2 der durch die Modulatoren MO1, M02 laufenden optischen Teilsignale OS1, OS2 zwischen sendeseitigem Leistungsteiler PMC und sendeseitigem Polarisationsstrahlteiler PBSS wird die Frequenzmodulation in die gewünschte differentielle Phasenmodulation DPM der optischen Teilsignale OS1, OS2 hinter dem sendeseitigen Polarisationsstrahlteiler PBSS umgewandelt. Sie besitzt ein Spektrum, welches von dem der optischen Frequenzmodulation FM abhängt.
Im einfachsten Fall kann man sogar auf die externe optische Frequenzmodulation FM verzichten und stattdessen die natürlichen Frequenzschwankungen des Sendelasers LA, seine Linienbreite, ausnutzen. Auch diese Frequenzschwankungen führen über den Laufzeitdifferenzbetrag |DT1-DT2| zwischen den optischen Laufzeiten DT1, DT2 zu differentieller Phasenmodulation DPM zwischen den optischen Teilsignalen OS1, OS2.
Desweiteren ist eine differentielle Phasenmodulation DPM zwischen den optischen Teilsignalen OS1 und OS2 auch dann vorhanden, wenn - alternativ zu Figur 1 - eine Sendeanordnung gemäß **Figur 2** mit zwei optischen Sendern TX1, TX2 verwendet wird. Die optischen Sender TX1, TX2 senden die orthogonal polarisierten optischen Teilsignale OS1, OS2 aus, die in einem sendeseitigen Polarisationsstrahlteiler PBSS kombiniert werden. In diesem Fall wirken die optischen Sender TX1, TX2 im Zusammenspiel mit dem sendeseitigen Polarisationsstrahlteiler PBSS als weitere phasendifferenzmodulierende Mittel PDML. Die dadurch entstehende differentielle Phasenmodulation DPM addiert sich zu einem statischen Differenzphasenwinkel EPS, welcher zu einem bestimmten Zeitpunkt zwischen den optischen Teilsignalen auftritt. Die optischen Sender TX1, TX2 werden mit sendeseitigen Modulationssignalen SDD1 für den optischen Sender TX1, und SDD2 für den optischen Sender TX2 moduliert.

Ziel der Sendeanordnungen gemäß Figur 1 und Figur 2 ist jeweils die Randomisierung des Interferenzphasenwinkels; d.h. beispielsweise können im Fall vorhandener Frequenzdifferenz FD zwischen den optischen Teilsignalen OS1, OS2 die cos- und die sin-Funktion der differentiellen Phasenmodulation DPM zwischen den optischen Teilsignalen OS1 und OS2 jeweils den Mittelwert Null besitzen, so daß wie später beschrieben gewonnene eingangsseitige Regelsignale L1, L2, L12 unabhängig vom statischen Differenzphasenwinkel EPS sind.

Figur 2 zeigt auch einen prinzipiellen Aufbau eines Übertragungssystems mit Polarisationsmultiplex. Nach Zusammenführen der optischen Teilsignale OS1, OS2 durch den sendeseitigen Polarisationsstrahlteiler PBSS können die Signale anschließend über einen Lichtwellenleiter LWL zu einem Empfänger RX mit einem Eingang EI übertragen werden. Da der Lichtwellenleiter LWL i.a. nicht polarisationserhaltend ist, ergibt sich die Schwierigkeit, die beiden optischen Teilsignale OS1, OS2 wieder zu trennen.

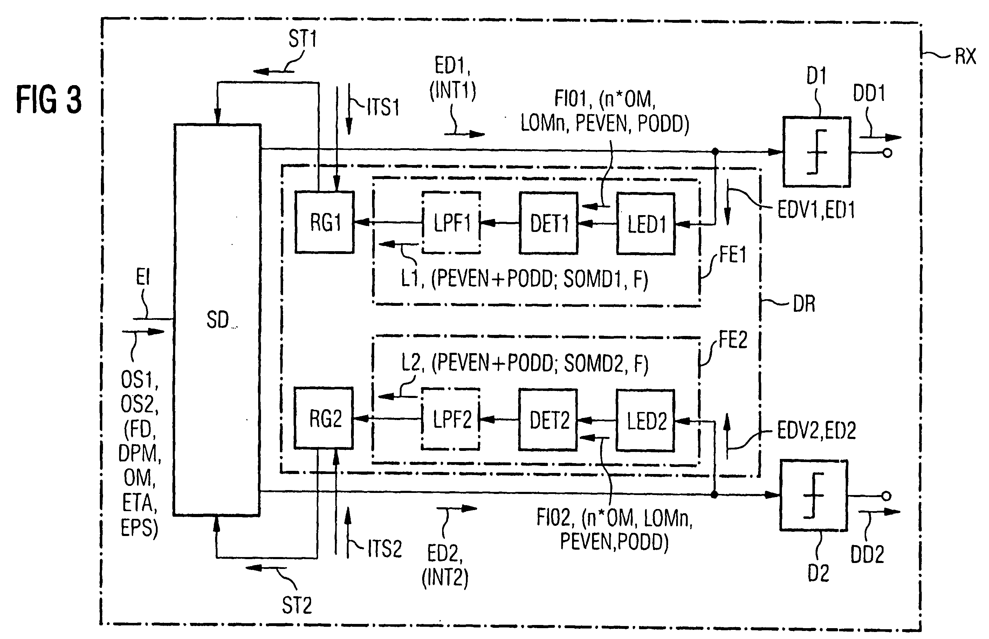

Gemäß **Figur 3** besteht der Empfänger RX beispielsweise aus einem Separater/Detektor SD und nachgeschalteter Empfängerelektronik.

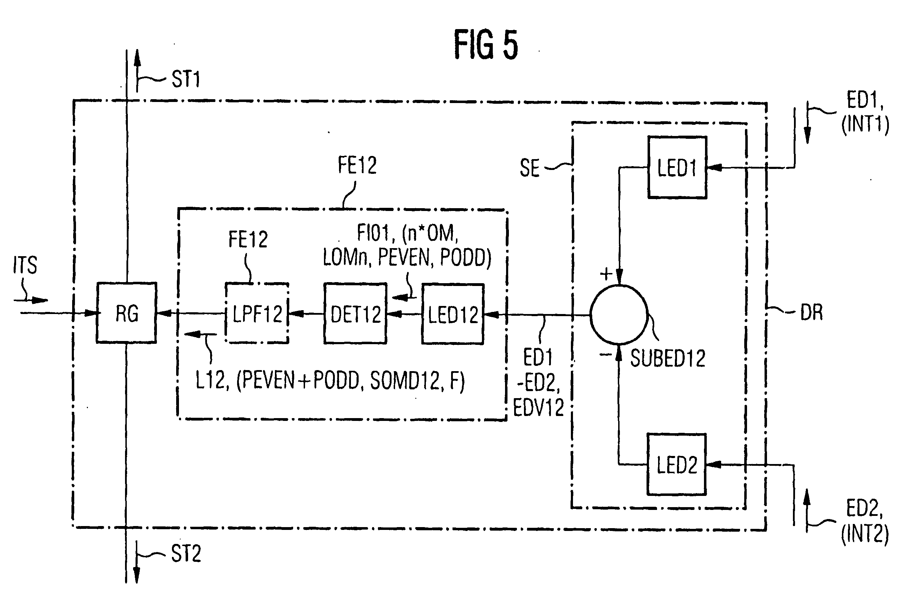

Ein Separator/Detektor SD für Polarisationsmultiplex ist in **Figur 4** gezeichnet. Die empfangenen optischen Teilsignale werden vom Eingang EI aus einem steuerbaren polarisierenden Element SUB zugeleitet. Dieses enthält einen vorzugsweise als endlos ausgebildeten steuerbaren Polarisationstransformator PT, welcher zumindest ein erstes ausgangsseitiges Regelsignal ST1, vorzugsweise auch ein zweites ausgangsseitiges Regelsignal ST2 empfängt. Sowohl das erste ausgangsseitige Regelsignal ST1 als auch das zweite ausgangsseitige Regelsignal ST2 können aus einem oder mehreren Signalen bestehen. Am Ausgang des Polarisationstransformators PT ist ein festes polarisierendes Element EPBS angebracht. Dieses kann als Polarisationsstrahlteiler ausgebildet sein, welcher erste und zweite Signalanteile OUT1, OUT2 an seinen Ausgängen zur Verfügung stellt. Die Signalanteile OUT1, OUT2 sollen im Idealfall die orthogonal polarisierten optischen Teilsignale OS1 bzw. OS2 sein; sie sind dies jedoch nur bei geeigneter Einstellung des steuerbaren Polarisationstransformators PT. Dieser enthält einen ersten eingangsseitigen, als zur PMD-Kompensation geeignet ausgebildeten Polarisationstransformator PMDC, genannt PMD-Kompensator, der von zu seiner Steuerung ausgebildeten ausgangsseitigen Regelsignalen STW1, STW2 gesteuert wird, und einen ihm in Ausbreitungsrichtung der optischen Signale OS1, OS2 nachfolgenden ausgangsseitigen Polarisationstransformator SPT, der von den zu seiner Steuerung ausgebildeten ausgebildeten Regelsignalen ST1, ST2 gesteuert wird. Wenn der steuerbare Polarisationstransformator PT dagegen nicht optimal eingestellt sind, ergibt sich Nebensprechen durch das jeweils unerwünschte optische Teilsignal OS2 bzw. OS1. Erfinderischer Gedanke ist es, die in diesem Fall auftretende Interferenz INT1 bzw. INT2 der beiden optischen Teilsignale OS1, OS2 zu detektieren. In diesen Signalanteilen OUT1 bzw. OUT2 tritt diese Interferenz INT1 bzw. INT2 auf, hier vermittelt durch die optische Feldstärke oder die optische Leistung.
Die Signalanteile OUT1 bzw. OUT2 werden in Photodetektoren PD11 bzw. PD21 detektiert, welche ein erstes detektiertes Signal ED1 bzw. ein zweites detektiertes Signal ED2 erzeugen. Diese enthalten wiederum die Interferenz INT1 bzw. INT2, hier aber vermittelt durch die Photoströme der Photodetektoren PD11 bzw. PD21.

Der eingangsseitige Polarisationstransformator PMDC, also der PMD-Kompensator PMDC, kann z.B. wie in den deutschen Patenanmeldungen 19841755.1 und 19830990.2 beschrieben ausgeführt werden. Ebenfalls von Interesse ist eine Ausführung mit einem wenigstens näherungsweise frequenzunabhängigen steuerbaren Polarisationstransformator, welcher von einem stark frequenzabhängigen, festen Polarisationstransformator gefolgt wird, der beispielsweise nur Polarisationsmodendispersion erster Ordnung aufweist. Letzterer kann aus einem Stück polarisationserhaltender Faser mit einer differentiellen Gruppenlaufzeit zwischen zwei Moden bestehen. Solche Anordnungen sind aus IEEE J. Lightwave Technology, 17(1999)9, S. 1602-1616 und den dort zitierten Literaturstellen bekannt. Das steuerbare polarisierende Element SUB oder Teile davon, insbesondere der steuerbare Polarisationstransformator PT, können auf einem Substrat, welches beispielsweise aus Lithiumniobat besteht, integriert sein. Statt des integrierten Aufbaus könnten beispielsweise auch der eingangsseite Polarisationstransformator PMDC weggelassen und der ausgangsseitige Polarisationstransformator SPT und das feste, als Polarisationsstrahlteiler ausgebildete polarisierende Element EPBS wie im Tagungsband der European Conference on Optical Communications 1993, Montreux, Schweiz, S. 401-404, Beitrag WeP9.3 beschrieben aufgebaut werden. Auch Ausführungsformen gemäß den in den deutschen Patentanmeldungen 19858148.3, 19919576.5 beschriebenen Gegenständen sind möglich.

Die detektierten Signale ED1, ED2 werden vorzugsweise wie in Figur 3 gezeigt Digitalempfängern D1, D2 zugeleitet. Diese können Entscheider und Taktrückgewinnungseinheiten beinhalten und geben Datenausgangssignale DD1, DD2 aus, welche im Idealfall logisch identisch sind mit den sendeseitigen Modulationssignalen SDD1 bzw. SDD2.

Die detektierten Signale ED1, ED2 werden einem Signalverarbeitungsmodul DR zugeleitet. Prinzipiell können stattdessen auch direkt die das steuerbare polarisierende Element SUB verlassenden Signalanteile OUT1, OUT2 diesem Signalverarbeitungsmodul DR zugeleitet werden; es ist dann für die Verarbeitung dieser Signalanteile OUT1, OUT2 auszulegen und die Photodetektoren PD11, PD21 entfallen.
Dieses Signalverarbeitungsmodul DR detektiert auftretende Interferenz INT1, INT2 zwischen den optischen Teilsignalen OS1, OS2 und kann auch Regler RG1, RG2 enthalten. Im Signalverarbeitungsmodul DR werden zu diesem Zweck als detektierte Signal ED1, ED2 ausgebildete verarbeitbare Signale EDV1, EDV2 verarbeitet. Es gibt ein ausgangsseitiges Regelsignal ST1, ST2 ab, das den ausgangsseitigen Polarisationstransformator SPT1, SPT2 ansteuert. Diese verarbeitbaren Signale EDV1, EDV2 werden dazu Filtern LED1 bzw. LED2 zugeleitet. Um den Aufwand gering zu halten, kann man z.B. den Strom an derjenigen Elektrode einer Photodiode messen, an der das Datensignal nicht abgenommen wird. Das bringt den Vorteil mit sich, daß die Datensignale nicht verfälscht werden, und daß durch die an der anderen Elektrode der Photodiode vorhandene kapazitive Abblockung gegen Masse bereits wenigstens teilweise die gewünschte Filterung vorgenommen wird. Detektierte Signale ED1, ED2 bestehen in diesem Fall jeweils aus einem breitbandigen Datensignal auf einer und einem niederfrequenten Signal auf einer anderen Leitung. Ersteres wird in Digitalempfänger D1 bzw. D2 weiterverarbeitet, letzteres Filter LED1 bzw. LED2 zugeführt. Alternativ dazu können das breitbandige Datensignal auf einer und das niederfrequente Datensignal auf einer anderen Leitung jeweils zwei verschiedenen Photodioden entstammen, welche zusammen mit jeweils einem vorgeschalteten weiteren optischen Leistungsteiler den Photodetektor PD11 bzw. PD21 bilden.
Filter LED1, LED2 sind bevorzugt als im Vergleich zur Symholrate niederfrequente Bandpaßfilter ausgelegt und selektieren dadurch spektrale Teilsignale FIO1, FIO2, in deren Frequenzbereichen durch die spezielle Ausprägung der Sendevorrichtung gemäß Figuren 1 oder 2 im steuerbaren polarisierenden Element SUB Interferenzen INT1, INT2 zwischen den optischen Teilsignalen OS1 und OS2 auftreten. Im Fall einer optischen Frequenzmodulation FM ist dies jeweils die Modulationsfrequenz MO - i.a. nicht identisch mit dem Frequenzmodulationshub - von beispielsweise 1 MHz, aber auch andere Modulationsfrequenzen im Bereich von ca. 0,1 Hz bis 1 GHz sind zumindest prinzipiell geeignet. Es können auch Vielfache n*MO der Modulationsfrequenz mit ganzzahligem n alleine oder zusammen mit ihr ausgewertet werden. Die Filter LED1, LED2 werden bevorzugt als Bandpaßfilter ausgelegt. Die Auslegung als Tiefpaßfilter mit Durchleitung des Gleichanteils ist ebenfalls möglich. Bei aperiodischem Frequenzmodulationssignal FMS oder einer durch die Linienbreiten der optischen Sender TX1, TX2 stark schwankenden Frequenzdifferenz FD zwischen den optischen Teilsignalen OS1, OS2 lassen die Filter LED1, LED2 bevorzugt das spektrale Maximum der Interferenzen INT1, INT2 in den detektierten Signalen ED1, ED2 passieren.

Die selektierten spektralen Teilsignale FIO1, FIO2 an den Ausgängen der Filter LED1, LED2 werden Detektoren DET1 bzw. DET2 zugeleitet, welche ggf. nach Tiefpaßfilterung in Tiefpaßfiltern LPF1, LPF2 eingangsseitige Regelsignale L1, L2 erzeugen. Diese Detektoren DET1, DET2. können als Effektivwert- oder Leistungsdetektoren ausgebildet sein. Bei Leistungsdetektoren wird definitionsgemäß das Moment zweiter Ordnung SOMD1, SOMD2 des entsprechenden spektralen Teilsignals FIO1, FIO2 ausgewertet. Das eingangsseitige Regelsignal L1, L2 ist dann eine als linear ausgebildete Funktion F dieses Moments zweiter Ordnung SOMD1, SOMD2. Bei Effektivwertdetektoren ist das eingangsseitige Regelsignal L1, L2 eine als Wurzelfunktion ausgebildete Funktion F dieses Moments zweiter Ordnung SOMD1, SOMD2 dieses spektralen Teilsignals FIO1, FIO2. Ggf. können auch Spitzenwertdetektoren und ähnliche Einrichtungen verwendet werden, insbesondere, wenn ein im wesentlichen monofrequentes spektrales Teilsignal FIO1, FIO2 vorliegt, dessen Spitzenwert eine auch hier wenigstens näherungsweise als Wurzelfunktion ausgebildete Funktion F der Leistung, also dieses Moments zweiter Ordnung SOMD1, SOMD2 dieses spektralen Teilsignals FIO1, FIO2 ist. Die eingangsseitigen Regelsignale L1, L2 werden Reglern RG1, RG2 zugeleitet, deren Ausgangssignale als ausgangsseitige Regelsignale ST1, ST2 zur Ansteuerung des steuerbaren polarisierenden Elements SUB im Separator/Detektor SD dienen, hier des in diesem enthaltenen Polarisationstransformators PT. Die Regler RG1, RG2 sind so ausgelegt, daß die eingangsseitigen Regelsignale L1, L2 minimale Beträge annehmen, d.h., minimale Interferenzen INT1, INT2 zwischen optischen Teilsignalen OS1 und OS2 anzeigen. Damit ist optimale Empfängerfunktion gewährleistet.

Das erfindungsgemäße, bereits beschriebene Signalverarbeitungsmodul DR des Empfängers RX in Figur 3 kann durch eine in Figur 5 gezeigte weitere Variante der Erfindung ausgeführt werden. Dies ist möglich in Fällen, in denen ein Separator/Detektor SD mit einem steuerbaren polarisierenden Element SUB vorhanden ist, welches ausgangsseitig Signalanteile OUT1, OUT2 abgibt, die wenigstens näherungsweise orthogonalen Anteilen der ihm zugeleiteten Teilsignale OS1, OS2 entsprechen, also beispielsweise einen steuerbaren Polarisationstransformator PT gefolgt von einem Polarisationsstrahlteiler als festes polarisierendes Element EPBS aufweist, wie in Figur 4 dargestellt. Da die Interferenzen INT1, INT2 und - bei Wahl gleicher Frequenzbänder - auch die spektralen Teilsignale FIO1, FIO2 dann in beiden Empfängerzweigen stets entgegengesetzt sind - gleiche elektrische Signalpolaritäten der Empfängerzweige vorausgesetzt -, wird in Figur 5 für solche Fälle in einem ersten Subtrahierer SUBED12 die Differenz zwischen erstem und zweitem als erstes bzw. zweites detektiertes Signal ED1, ED2 ausgebildeten verarbeitbaren Signalen EDV1, EDV2 als weiteres detektiertes Signal ED1-ED2 und gleichzeitig als weiteres verarbeitbares Signal EDV12 verarbeitet. Es wird einem wie Filter LED1, LED2 aufgebautem Filter LED12 zugeführt, welches ein weiteres spektrales Teilsignal FIO12 passieren läßt. Dieses wird einem wie Detektoren DET1, DET2 aufgebauten Detektor DET12 zugeleitet, welcher daraus ein weiteres eingangsseitiges Regelsignal L12 erzeugt, das z.B. gleich dem Moment zweiter Ordnung SOMD12 diese weiteren spektralen Teilsignals FIO12 ist. Es kann ein wie Tiefpaßfilter LPF1, LPF2 aufgebautes Tiefpaßfilter LPF12 folgen. Ein Regler RG erzeugt ausgangsseitige Regelsignale ST1 und ggf. ST2. Er ist so ausgelegt, daß das ihm zugeführte eingangsseitige Regelsignal L12 minimiert wird und damit auch die Interferenzen INT1, INT2. Prinzipiell wäre zur Bereitstellung des Eingangssignals des einzigen Detektors DET12 ein einziges weiteres Filter LED12 ausreichend; da breitbandige Subtrahierer SUBED12 jedoch aufwendig sind, ist es i.d.R. günstiger, an den Eingängen eines entsprechend schmalbandigeren ersten Subtrahierers SUBED12 zunächst Filter LED1 bzw. LED2 vorzusehen und ggf. an dessen Ausgängen trotzdem ein weiteres Filter LED12, welches kaskadiert mit Filter LED1 bzw. LED2 die gewünschte spektrale Formung der Differenz der detektierten Signale ED1, ED2 ergibt.

Die Regler RG1, RG2, RG in den Figuren 3 und 5 arbeiten bevorzugt nach einem Lock-In-Verfahren und besitzen vorzugsweise Integral- oder Proportional-Integral-Regelglieder. Die Regler RG1, RG2, RG können ggf. auch weggelassen werden, so daß ein eingangsseitiges Regelsignal L1, L2, L12 gleichzeitig als ausgangsseitiges Regelsignal ST1, ST2 dient.

Sowohl die eingangsseitigen Regelsignale L1, L2, L12 als auch die ausgangsseitigen Regelsignale ST1, ST2 der Regler RG1, RG2, RG sind Regelsignale L1, L2, L12, ST1, ST2.
Falls die optische Frequenzmodulation FM durch - vorzugsweise sinusförmige - Direktmodulation eines Halbleiterlasers erzeugt wird, besitzen die optischen Teilsignale OS1, OS2 neben der gewünschten, durch optische Frequenzmodulation FM erzeugten differentiellen Phasenmodulation DPM, die einen Hub ETA besitze, welcher im folgenden als Spitzenhub in Radiant verstanden wird, auch eine unerwünschte Amplitudenmodulation. Diese ist von den empfängerseitig ausgewählten Polarisationszuständen unabhängig und erschwert daher das Einstellen der Polarisationen in steuerbaren polarisierenden Elementen SUB, SUB1, SUB2, insbesondere der steuerbaren Polarisationstransformatoren PT, PT1, PT2. In solchen Fällen kann es günstig sein, Vielfache n*OM, beispielsweise n = 2, 3, 4, ..., der Modulationsfrequenz OM auszuwerten.

Zumindest bei sinusförmiger Frequenzmodulation FM sind die Amplituden empfängerseitig detektierter gerader (n = 0, 2, 4, ...) und ungerader (n = 1, 3, 5, ...) Vielfacher n*OM der Modulationsfrequenz OM proportional zu cos bzw. sin eines statischen Differenzphasenwinkels EPS, der empfindlich vom Laufzeitdifferenzbetrag |DT1-DT2| zwischen den optischen Laufzeiten DT1, DT2 abhängt.

Erfindungsgemäß ist es aber möglich, mindestens ein gerades und gleichzeitig mindestens ein ungerades Vielfaches der Modulationsfrequenz OM auszuwerten. Bei geeigneter Auslegung des oder der Filter LED1, LED2, LED12 ist die jeweilige Filterausgangsleistung als Moment zweiter Ordnung SOMD1, SOMD2, SOMD12 und ist/sind daher auch die eingangsseitigen Regelsignale L1, L2, L12 proportional zu cos^2(EPS)+sin^2(EPS) = 1, also unabhängig vom statischen Differenzphasenwinkel EPS.
Es sei LOMn ein Leistungsübertragungsfaktor bei dem Vielfachen n*OM. In einem ersten solchen Beispiel werden Modulationsfrequenz OM, entsprechend Bessellinie J1, wobei Jn mit ganzzahligem n eine Besselfunktion erster Gattung, n-ter Ordnung sei, und doppelte Modulationsfrequenz 2*OM, entsprechend Bessellinie J2, durch Filter LED1, LED2, LED12 geführt, und die Detektoren DET1, DET2, DET12 sind Leistungsdetektoren oder Effektivwertdetektoren. Es wird LOM1*J1(ETA)^2 = LOM2*J2 (ETA)^2 eingestellt, was z.B. durch |J1(ETA)| = |J2(ETA)| mittels ETA = 2,63 sowie LOM1=LOM2 wenigstens näherungsweise erreicht wird.
Die dieser Auslegung zugrundeliegende weitere Ausgestaltung des erfinderischen Prinzips ist, daß die detektierte - oder im Fall frequenzunabhängiger Detektion bereits die detektierbare - erste Leistung PEVEN bzw. zweite Leistung PODD, welche man durch Detektion nur geradzahliger bzw. nur ungeradzahliger Vielfacher der Modulationsfrequenz OM im eingangsseitigen Regelsignal L1, L2, L12 mißt, eine vom statischen Differenzphasenwinkel EPS unabhängige Summe PEVEN+PODD besitzen. Sie besitzen dann auch dieselben Erwartungswerte.

Es folgen weitere Ausführungsbeispiele entsprechend diesem Prinzip:

Es ist möglich, daß der Modulationshub ETA im Laufe der- Zeit Schwankungen unterworfen ist, z.B. durch Laseralterung. Um die Detektion dennoch in erster Näherung unabhängig von Differenzphasenwinkel EPS halten zu können, dürfen die eingangsseitigen Regelsignale L1, L2, L12 in erster Näherung nicht vom Modulationshub ETA abhängen. Dies erzielt man beispielsweise durch Filter LED1, LED2, LED12, welche als Bandpaßfilter ausgebildet sind und jeweils die Modulationsfrequenz OM, ihr Doppeltes 2*OM und ihr Dreifaches 3*OM passieren lassen. Die dabei erforderlichen Werte der Leistungsübertragungsfaktoren sind wenigstens näherungsweise LOM1=0,72852*LOM2 und LOM3=1,6036*LOM2, und es wird wenigstens näherungsweise ETA=3.0542 gewählt.

Wie oben erwähnt, kann die Detektion bei der einfachen Modulationsfrequenz OM Probleme bringen, so daß es günstiger sein kann, stattdessen bei 2*OM, 3*OM, 4*OM zu detektieren. Die dabei erforderlichen Werte der Leistungsübertragungsfunktionen sind wenigstens näherungsweise LOM2=0,64066*LOM3 und LOM4=1,3205*LOM3, und es wird wenigstens näherungsweise ETA=4,2011 gewählt. Die nicht genannten Leistungsübertragungsfaktoren, im jetzigen Beispiel also LOMO, LOM1, LOM5, LOM6, LOM7, ... fur Frequenzen 0, OM, 5*OM, 6*OM, 7*OM, ..., seien jeweils wenigstens näherungsweise gleich Null.
Falls neben der optischen Frequenzmodulation FM auch eine Amplitudenmodulation auftritt, können sich die erforderlichen Leistungsübertragungsfaktoren LOMn (n = 0, 1, 2, ...) von den oben genannten Werten unterscheiden, und zwar desto mehr, je größer die Amplitudenmodulation ist.

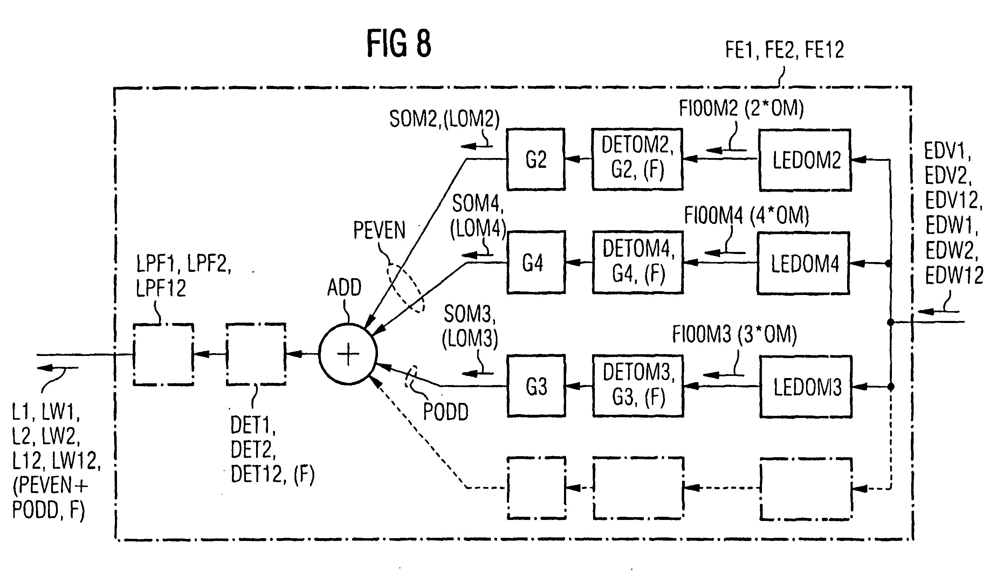

Der Entwurf solcher Bandpaßfilter kann schwierig sein. In einer weiteren Ausgestaltung der Erfindung können mehrere oder einzelne, bevorzugt als Bandpaßfilter ausgebildete Filter LEDOMn für Frequenzen n*OM vorgesehen werden, da diese Signale bei den Frequenzen n*OM mathematisch orthogonal sind, so daß sich ihre Einzelleistungen direkt addieren lassen, ohne Kreuzleistungsterme. Diese Filter LEDOMn besitzen jeweils einen angeschlossenen, bevorzugt als Leistungsmesser ausgebildeten Detektor DETOMn. Eine solche Ausführungsform der in den Figuren 3 und 5 ausgeführten Elemente, nämlich Filter LED1, LED2, LED12, Detektoren DET1, DET2, DET12, Tiefpaßfilter LPF1, LPF2, LPF12, die zu Filtereinheiten FE1, FE2, FE12 zusammengefaßt werden können, zeigt **Figur 8**. Hier gilt entsprechend dem letzen Ausführungsbeispiel n = 2, 3, 4, aber anderes ausgewählte n sind ebenfalls möglich. Die alternativ durch Figur 8 implementierte Filtereinheit FE12 kann auch die Subtrahiereinheit SE enthalten, wobei sich lineare Funktionsblöcke gemäß Kommutativ- und Distributivgesetz verschieben oder aufteilen lassen.
Die Aufteilung erfolgt auf Filter LEDOMn mit ganzzahligem n. Die Ausgangssignale dieser Filter LEDOMn sind spektrale Teilsignale FIOOMn mit ganzzahligem n und bestehen im wesentlichen aus Spektralkomponenten bei den Frequenzen n*OM. Diese spektralen Teilsignale FIOOMn mit ganzzahligem n werden Detektoren DETOMn mit ganzzahligem n zugeleitet.
Die Leistungsübertragungsfaktoren LOMn ergeben sich jeweils durch Multiplikation des Leistungsübertragungsfaktors eines Filters LEDOMn mit dem eines Gewichtes Gn, welches Teil des dazugehörigen Detektors DETOMn ist oder jenem nachgeschaltet. Gewicht Gn kann durch ein Potentiometer realisiert werden. Spätestens nach der Gewichtung durch Gewicht Gn erhält man jeweils ein Moment zweiter Ordnung SOMn mit ganzzahligem n, nämlich die Leistung des spektralen Teilsignals FIOOMn. Diese Momente zweiter Ordnung SOMn mit dem jeweiligen Leistungsübertragungsfaktor LOMn werden in einem Addierer ADD addiert. Dabei werden erfindungsgemäß eine erste Leistung PEVEN mindestens einer Spektralkomponente mit geradzahligem n und eine zweite Leistung PODD mindestens einer Spektralkomponente mit ungeradzahligem n addiert. Am Ausgang des Addierers ADD und ggf. nach Durchlaufen eines Tiefpaßfilters LPF1, LPF2, LPF12 ergibt sich das gewünschte eingangsseitige Regelsignal L1, L2 oder L12 entsprechend den Ausführungsbeispielen von Filtereinheiten FE1, FE2 oder FE12 der Figuren 3 oder 5, welches wiederum erfindungsgemäß vom statischen Differenzphasenwinkel EPS und in erster Näherung vom Modulationshub ETA unabhängig ist, weil es eine konstante Summe PEVEN+PODD der ersten Leistung PEVEN geradzahliger und der zweiten Leistung PODD ungeradzahliger Spektralkomponenten aufweist.
Das eingangsseitige Regelsignal L1, L2, L12 ist eine Funktion F der Momente zweiter Ordnung SOMn dieser spektralen Teilsignale FIOOMn, welche linear ist, nämlich die gewichtete Summe der Einzelleistungen dieser spektralen Teilsignale FIOOMn. Detektion und Addition können auch vertauscht werden. In diesem Fall sind in Figur 8 die Detektoren DETOMn und ggf. Gewichte Gn durch Durchverbindungen zu ersetzen, während hinter dem Addierer ADD ein - in Figur 8 bisher nicht benötigter und deshalb bisher durch eine Durchverbindung zu ersetzender - Detektor DET1, DET2, DET12, welcher ein Leistungs- oder Effektivwertdetektor ist, vorgesehen wird.

In der Praxis ist es vorteilhaft, die Filtereinheiten FE1, FE2, FE12 gemäß Figur 8 oder Teilen der Figuren 3 und 5 durch digitale Signalverarbeitung mit einem Mikroprozessor zu realisieren. Dieser Mikroprozessor kann auch die Regler RG, RG1, RG oder Teile davon realisieren.

Weitere Variationen des erfinderischen Prinzips sind dadurch möglich, daß andere zeitliche Verläufe der differentiellen Phasenmodulation DPM zwischen den beiden optischen Teilsignalen OS1, OS2 vorgesehen werden. Vorzugsweise werden solche zeitliche Verläufe so ausgestaltet, daß ein eingangsseitiges Regelsignal L1, L2, L12 möglichst unabhängig von der Amplitude der differentiellen Phasenmodulation DPM oder einer sie erzeugenden optischen Frequenzmodulation FM eines Sendelasers LA ist.
In der Praxis ergibt eine sinusförmige Strommodulation als Frequenzmodulationssignal FMS eines Sendelasers LA ohnehin eine nicht sinusförmige Frequenzmodulation FM und somit auch eine nicht sinusförmige differentielle Phasenmodulation DPM zwischen den optischen Teilsignalen OS1, OS2. Daher ergibt sich in den detektierten Signalen ED1, ED2 auch kein reines Besselspektrum; insbesondere ist i.d.R. die Modulationsfrequenz OM stark vertreten. Um nicht wie oben beschrieben auf ihre höheren Harmonische n*OM, beispielsweise bis n = 4 ausweichen zu müssen, können geeignete Momente zweiter Ordnung SOMn der spektralen Teilsignale DETOMn und/oder ggf. gemischte Momente zweiter Ordnung SOMmn mit ganzzahligen m, n zwischen diesen bestimmt werden.

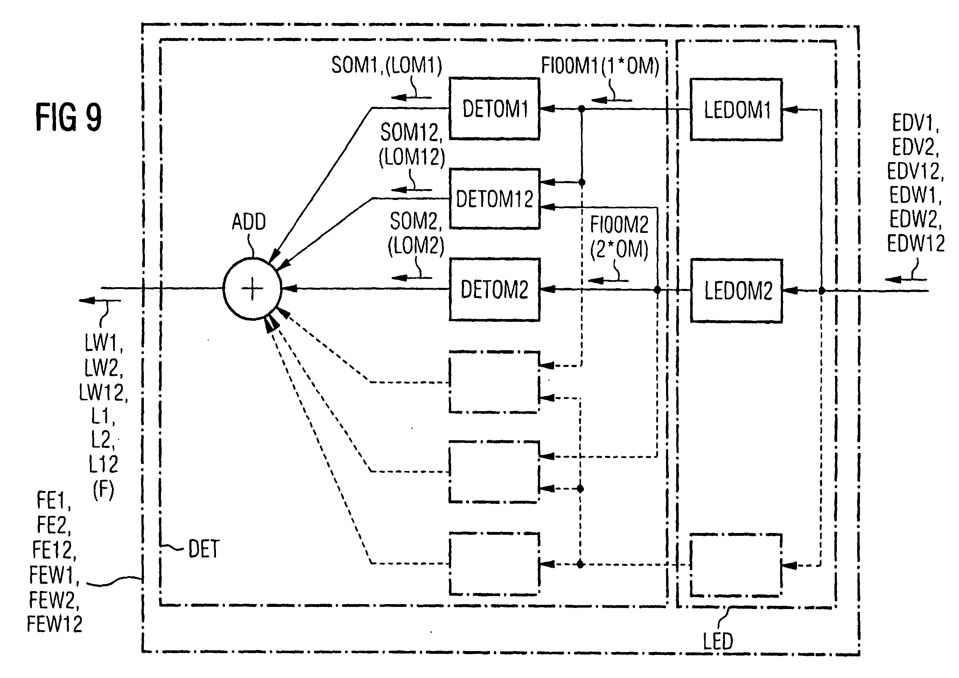

In **Figur 9** ist wiederum eine Filtereinheit FE1, FE2, FE12 dargestellt, der ein detektiertes Signal ED1, ED2, ED1-ED2 zugeleitet wird. Ein Filter LED mit nachfolgendem Detektor DET ist vorhanden, welche durch einen Mikroprozessor mit eingangsseitigem Analog-Digital-Wandler realisiert wird. In diesem Detektor DET werden die Fourier komponenten bei der Modulationsfrequenz OM und ihrem Doppelten 2*OM als spektrale Teilsignale FIOOM1, FIOOM2 berechnet, was als Filterung in als Bandpaßfiltern ausgebildeten Filtern LEDOM1, LEDOM2 innerhalb eines Filters LED aufgefaßt werden kann. Wegen der Bildung des gemischten Moments zweiter Ordnung SOM12 werden die beiden spektralen Teilsignale FIOOM1, FIOOM2 zuvor bezüglich ihrer Laufzeit bereinigt, die dadurch entsteht, daß die Bildung der Fourierkoeffizienten nicht notwendigerweise zeitlich mit der Schwingung der Frequenzmodulation FM zusammenfällt. Besitzt beispielsweise eine Fourierkomponente FIOOM1 des spektralen Teilsignals bei der Modulationsfrequenz OM einen komplexen Phasenzeiger, so werden alle ermittelten Fourierkomponenten FIOOM1, FIOOM2, ... FIOOMn entsprechend dem Verschiebungssatz der Fouriertransformation mit der 1., 2., ... nten Potenz des komplex Konjugierten dieses Phasenzeigers multipliziert. Anschließend wird eine gewichtete Summe der Momente zweiter Ordnung SOM1, SOM2, SOM12 dieser beiden spektralen Teilsignale FIOOM1, FIOOM2 und des gemischten Moments zweiter Ordnung zwischen diesen beiden spektralen Teilsignalen FIOOM1, FIOOM2 gebildet, welche als eingangsseitiges Regelsignal L1, L2, L12 dient. Die dabei verwendeten Gewichte sind gleichzeitig die entsprechenden Leistungsübertragungsfaktoren LOM1, LOM2, LOM12 dieser Momente zweiter Ordnung SOM1, SOM2, SOM12. Sie werden so gewählt, daß sich ein vom statischen Differenzphasenwinkel EPS unabhängiges eingangsseitiges Regelsignal L1, L2, L12 ergibt. Dies ist durch Inversion einer 3x3-Matrix möglich.
Wenn ein reines Besselspektrum vorliegt, wird beispielsweise der Leistungsübertragungsfaktor LOM12 des gemischten Moments zweiter Ordnung SOM12 gleich Null gewählt und wie oben erwähnt LOM1*J1(ETA)^2 = LOM2*J2(ETA)^2 eingestellt, was z.B. durch |J1(ETA)| = |J2(ETA)| mittels ETA = 2,63 sowie LOM1=LOM2 wenigstens näherungsweise erreicht wird. In der Praxis ist wegen der auftretenden Verzerrung der optischen Frequenzmodulation FM dagegen meist ein von Null verschiedener Leistungsübertragungsfaktor LOM12 des gemischten Moments zweiter Ordnung SOM12 erforderlich, der auch negativ oder komplex sein kann.
In Erweiterung dieses Ausführungsbeispiel können neben den erwähnten spektralen Teilsignalen FIOOM1, FIOOM2 weitere spektrale Teilsignale FIOOMn, ihre Momente zweiter Ordnung SOMn und alle möglichen gemischten Momente zweiter Ordnung SOMmn mit ganzzahligen m, n, zwischen je einem spektralen Teilsignalen FIOOMm und einem anderen spektralen Teilsignal FIOOMn gebildet werden und mit Gewichten gewichtet zu einem eingangsseitigen Regelsignal L1, L2, L12 addiert werden, so daß sich ein vom statischen Differenzphasenwinkel EPS unabhängiges eingangsseitiges Regelsignal L1, L2, L12 ergibt. Optimale Gewichte, die auch die Signal-Rausch-Verhältnisse der einzelnen spektralen Teilsignale FIOOMn berücksichtigen, lassen sich hier z.B. durch lineare Programmierung nach dem Simplexverfahren ermitteln. In Frage kommt hier insbesondere das spektrale Teilsignal FIOOM3 beim Dreifachen 3*OM der Modulationsfrequenz OM, aber auch das ein Gleichsignal darstellende, ggf. mit einem konstanten Offset versehene spektrale Teilsignal FIOOMO beim Nullfachen 0*OM der Modulationsfrequenz OM.
Um trotz ggf. vorhandener parasitärer Amplitudenmodulation ein unverfälschtes eingangsseitiges Regelsignal L1, L2, L12 zu erhalten, können diejenigen im wesentlichen konstanten Anteile der spektralen Teilsignale FIOOM1 und ggf. FIOOM2, FIOOM3, ..., welche auf diese Amplitudenmodulation zurückzuführen sind, vor Weiterverarbeitung dieser spektralen Teilsignale FIOOM1 und ggf. FIOOM2, FIOOM3, ..., subtrahiert werden.

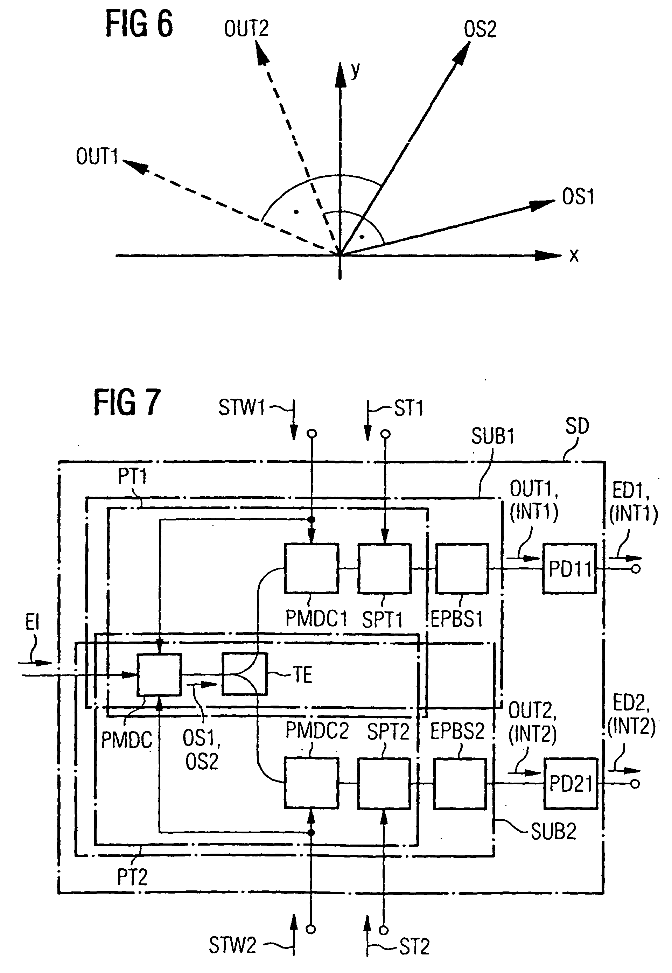

Durch sendeseitiges nichtideales Multiplex im sendeseitigen Polarisationsstrahlteiler PBSS, oder durch polarisationsabhängige Dämpfung oder Verstärkung im Lichtwellenleiter LWL kann es zu reduzierter Orthogonalität der empfangenen optischen optischen Teilsignale OS1, OS2 kommen. Gemäß **Figur 6** und **Figur 7** ist es in solchen Fällen günstig, je ein weiteres steuerbares polarisierendes Element SUB1, SUB2 vorzusehen, wobei eine Leistungsteilung mit einem empfängerseitigen Leistungsteiler TE vorgesehen ist, der Teil der weiteren steuerbaren polarisierenden Elemente SUB1, SUB2 sein kann oder ihnen vorgelagert ist. In Figur 7 bestehen diese weiteren steuerbaren polarisierenden Elemente SUB1, SUB2 aus weiteren steuerbaren Polarisationstransformatoren PT1, PT2. Diese enthalten je einen weiteren eingangsseitigen, als zur PMD-Kompensation geeignet ausgebildeten Polarisationstransformator PMDC1, PMDC2, genannt PMD-Kompensator, der von mindestens je einem zu seiner Steuerung ausgebildeten ausgangsseitigen Regelsignal STW1, STW2 gesteuert wird, und je einen ihm in Ausbreitungsrichtung der optischen Signale OS1, OS2 nachfolgenden ausgangsseitigen Polarisationstransformator SPT1, SPT2, der von mindestens je einem zu seiner Steuerung ausgebildeten Regelsignal ST1, ST2 gesteuert wird. Statt dieser oder zusätzlich zu diesen weiteren eingangsseitigen, als zur PMD-Kompensation geeignet ausgebildeten Polarisationstransformatoren PMDC1, PMDC2 kann, dem empfängerseitigen Leistungsteiler TE vorgelagert, der erste eingangsseitige, als zur PMD-Kompensation geeignet ausgebildete Polarisationstransformator PMDC verwendet werden. Gefolgt werden diese weiteren steuerbaren Polarisationstransformatoren PT1, PT2 von jeweils einem nachgeschalteten weiteren, ersten bzw. zweiten festen polarisierenden Element EPBS1, EPBS2, welche als Polarisationsstrahlteiler oder Polarisator ausgeführt sein können. Die weiteren steuerbaren polarisierenden Elemente SUB1, SUB2 oder Teile davon können wiederum auf Substraten integriert sein. Die eingangsseitigen Polarisationstransformatoren PMDC, PMDC1, PMDC2 seien zunächst nicht vorhanden und durch Durchverbindungen ersetzt, so daß der Eingang EI des Separators/Detektors SD direkt mit dem empfängerseitigen Leistungsteiler TE verbunden ist. Für den Fall linearer Polarisationen sind die durch das Ausführungsbeispiel der Figur 7 erfindungsgemäß erreichten Polarisationsanpassungen in Figur 6 skizziert. Die empfangenen optischen Teilsignale OS1, OS2 sind in diesem Beispiel nicht orthogonal zueinander polarisiert. Der erste Signalanteil OUT1, welcher durch das erste, feste polarisierende Element EPBS1 transmittiert wird, ist in diesem jedoch orthogonal zum zweiten optischen Teilsignal OS2, und der zweite Signalanteil OUT2, welcher durch das zweite feste polarisierende Element EPBS2 transmittiert wird, ist in diesem orthogonal zum ersten optischen Teilsignal OS1. Damit sich die Einstellungen gemäß Figur 6 ergeben, ist vorzugsweise die Ausgestaltung der Signalverarbeitungsmodul DR aus Figur 3 zu benutzen.

Je nach Art und Weise der Herstellung der differentiellen Phasenmodulation DPM zwischen optischen Teilsignalen OS1 und OS2 können das Signalverarbeitungsmodul DR und insbesondere die Filter LED1, LED2, LED12 und die Detektoren DET1, DET2, DET12 noch weiter variiert werden. Verzichtet man bei vorhandenem Laufzeitdifferenzbetrag |DT1-DT2| zwischen den optischen Laufzeiten DT1, DT2 auf die optische Frequenzmodulation FM und erzeugt die differentielle Phasenmodulation DPM durch natürliche Frequenzschwankungen des Sendelasers LA, so sollten Filter LED1, LED2, LED12 so ausgeprägt sein, daß wesentliche Teile des entstehenden, sich i.d.R. über mehrere MHz erstreckenden Interferenzspektrums durchgelassen werden. Verwendet man, wie in Figur 1 gezeigt, Winkelmodulatoren PHMO1, PHMO2 oder einen differentiellen Winkelmodulator PHMO12 und bildet diese als Frequenzverschieber bzw. differentieller Frequenzverschieber aus, oder verwendet man, wie in Figur 2 gezeigt, verschiedenfrequente optische Sender TX1, TX2, so sind Filter LED1, LED2, LED12 auf die entstehende Differenzfrequenz FD zwischen den optischen Teilsignalen OS1 und OS2 abzustimmen. Als Frequenzverschieber oder differentieller Frequenzverschieber können z.B. akustooptische oder elektrooptische Bauelemente eingesetzt werden. Alternativ dazu können als Winkelmodulatoren PHMO1, PHMO2 oder differentiellen Winkelmodulator PHMO12 Phasenmodulatoren bzw. ein differentieller Phasenmodulator eingesetzt werden, welche so angesteuert werden, daß sich eine als Funktion der Zeit wenigstens stückweise lineare differentielle Phasenmodulation DPM ergibt, wobei die zeitliche Ableitung der differentiellen Modulationsphase das 2*πfache der Frequenzdifferenz FD ist. Dies sind z.B. Phasenmodulatoren nach dem Serrodynprinzip mit sägezahnförmiger Phasenverschiebung.

Werden die Winkelmodulatoren PHMO1, PHMO2 bzw. der differentielle Winkelmodulator PHMO12 als Phasenmodulatoren bzw. differentieller Phasenmodulator mit sinusförmiger differentieller Phasenmodulation DPM ausgebildet, ergibt sich dagegen ein Besselspektrum, wie im Fall sinusförmiger optischer Frequenzmodulation FM, dessen Detektion bereits weiter oben betrachtet wurde.

Schließlich können durch Messung der Leistungen der detektierten Signale ED1, ED2 oder durch Ablesen des trotz Einregelung des Polarisationstransformators PT verbleibenden Restanteils des aus der Differenz zwischen dem ersten detektierten Signal ED1 und dem zweiten detektierten Signal ED2 gewonnenen weiteren Reglereingangssignals L12 Signale gewonnen werden, welche zur Überprüfung und ggf. langsamen Nachregelung oder gezielten Vorverzerrung der sendeseitigen Polarisationsorthogonalität verwendet werden. Dies ermöglicht die Optimierung des Übertragungssystems derart, daß beispielsweise polarisationsabhängige Dämpfung des Lichtwellenleiters nicht nur nicht zu Nebensprechen führt, sondern auch zu keiner Benachteiligung eines der optischen optischen Teilsignale OS1, OS2 gegenüber dem anderen.
Auch können, z.B. durch Aufbringen weiterer oder Ausnutzen natürlicher, im Spektrum des Sendelasers LA enthaltener optischer Frequenzmodulation, z.B. mit einer von der Modulationsfrequenz OM verschiedenen Frequenz, oder durch Auswertung von Reglersignalen, Informationen gewonnen werden, welche z.B. die adaptive Regelung des Modulationshubes ETA oder von Leistungsübertragungsfaktoren LOMn ermöglichen.
Besonders vorteilhaft ist es, in einer Anordnung gemäß Figur 9 die Erwartungswerte mehrerer oder aller auftretenden Momente SOM1, SOM2, ..., SOMn, SOM12, ... SOMmn der spektralen Teilsignale FIOOMn mit ganzzahligem n zu ermitteln. Daraus läßt sich nämlich der Modulationshub ETA berechnen. Durch einen Rückkanal kann das Frequenzmodulationssignal FMS und dadurch die optische Frequenzmodulation FM am Sendelaser LA so eingestellt werden, daß sich optimales Signal-RauschVerhältnis des gewonnenen Reglereingangssignals L1, L2, L12 ergibt. Als zusätzliche Frequenzmodulation, welche die Bildung dieser Erwartungswerte zuläßt, eignet sich z.B. langsame thermische Frequenzmodulation eines durch einen Halbleiter ausgebildeten Sendelasers LA.

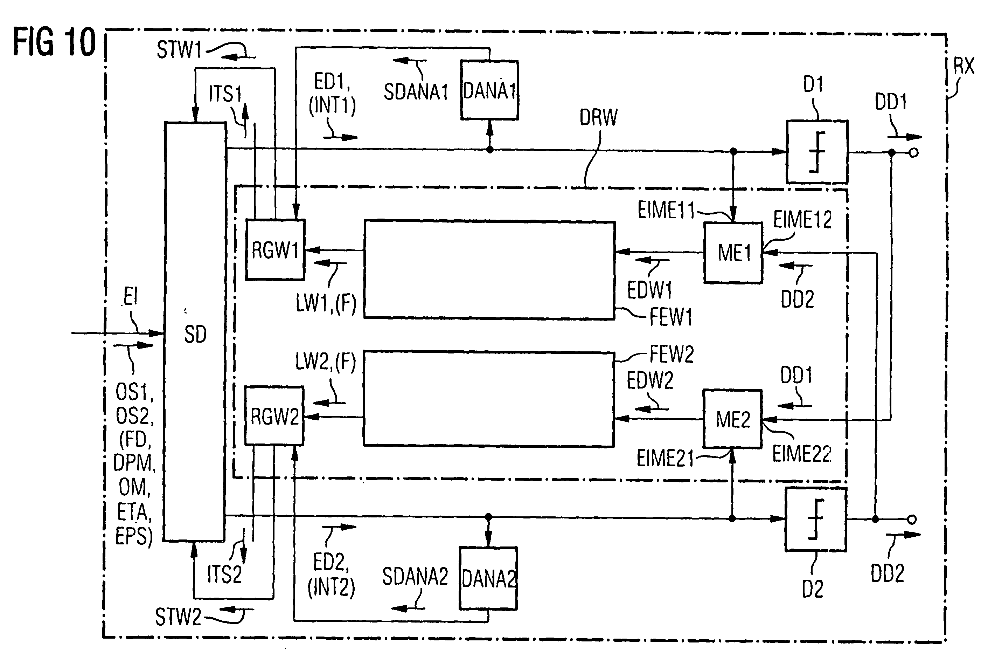

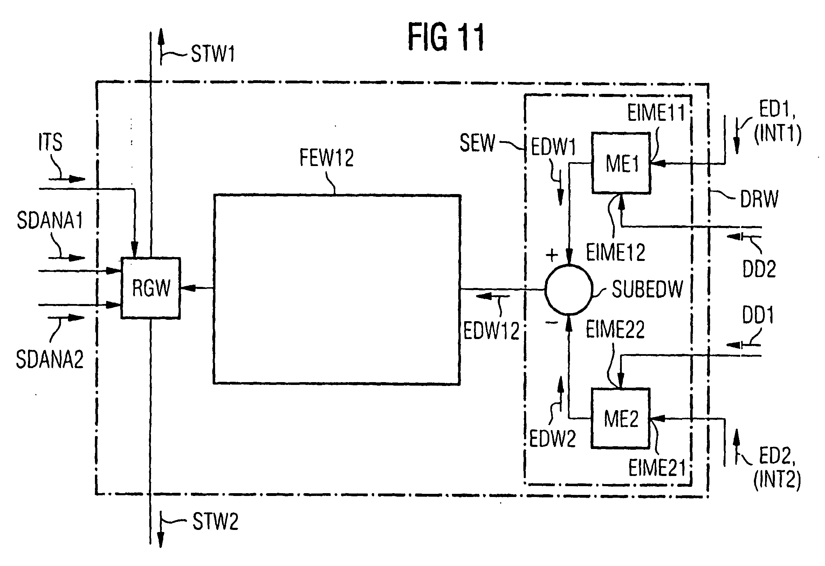

Die bisherigen Ausführungsbeispiel der Erfindung beziehen sich allesamt vorzugsweise auf die Einstellung eines ausgangsseitigen Polarisationstransformators SPT, SPT1, SPT2, welcher nicht oder nur in geringem Maße ggf. auftretende Polarisationsmodendispersion kompensieren kann. Die folgenden Ausführungsbeispiele der Erfindung beziehen sich dagegen vorzugsweise auf die Einstellung eines eingangseitigen Polarisationstransformators PMDC, PMDC1, PMDC2, welcher zur PMD-Kompensation geeignet ist. Minimaler optischer Aufwand ergibt sich, wenn die Regelsignale für den PMD-Kompensator PMDC in Figur 4 oder die PMD-Kompensatoren PMDC1 und PMDC2 in Figur 7 aus dem ersten und zweiten detektierten Signal ED1, ED2 abgeleitet werden. Dies erfolgt z.B. durch einfache elektrische Spektralanalyse; eine Abschwächung hochfrequenter Signalanteile deutet auf unkompensierte PMD hin und ist durch geeignete Einstellung eines eingangsseitigen Polarisationstransformators PMDC, PMDC1, PMDC2 zu vermeiden.
In vorteilhafter Ausgestaltung der Erfindung kann der Empfänger RX gemäß **Figur 10** statt des Signalverarbeitungsmoduls DR oder besser zusätzlich zu demselben ein weiteres Signalverarbeitungsmodul DRW aufweisen. Dieses enthält eingangsseitig die detektierten Signale ED1, ED2, welche je einem ersten Korrelationseingang EIME11, EIME21 eines korrelierenden Elements ME1, ME2 zugeleitet werden. An je einem zweiten Korrelationseingang EIME12, EIME22 der korrelierenden Elemente ME1, ME2 wird das Datenausgangssignal DD2, DD1, das aus dem jeweils anderen detektierten Signal ED2, ED1 gewonnen wird, zugeleitet. An je einem Ausgang des korrelierenden Elements ME1, ME2 entsteht ein weiteres, als Korrelationssignal ausgebildetes verarbeitbares Signal EDW1, EDW2. Diese weiteren verarbeitbaren Signale EDW1, EDW2 werden weiteren Filtereinheiten FEW1, FEW2, welche wie die vorgenannten Filtereinheiten FE1, FE2, FE12 aufgebaut sind, zugeleitet. Diese geben ausgangsseitig weitere eingangsseitige Regelsignale LW1, LW2 ab, welche weiteren, wie vorgenannte Regler RG1, RG2 aufgebauten Reglern RGW1, RGW2 zugeleitet werden. Diese weiteren Regler RGW1, RGW2 geben ausgangsseitig weitere Stellsignale STW1, STW2 zur Steuerung der eingangsseitigen Polarisationstransformatoren PMDC1, PMDC2, PMDC ab.
Das weitere Signalverarbeitungsmodul DRW des Empfängers RX in Figur 10 kann durch eine in **Figur 11** gezeigte weitere Variante der Erfindung ausgeführt werden. Dies ist vorzugsweise möglich in Fällen, in denen nur ein gemeinsamer eingangsseitiger Polarisationstransformator PMDC vorhanden ist. Analog zu Figur 5 wird aus den weiteren als Korrelationssignale ausgebildeten verarbeitbaren Signalen EDW1, EDW2 durch einen weiteren Subtrahierer SUBEDW ein zusätzliches als Korrelationssignal ausgebildetes verarbeitbares Signal EDW12 erzeugt. Dieses wird einer weiteren Filtereinheit FEW12, die wie Filtereinheiten FE1, FE2, FE12, FEW1, FEW2 aufgebaut sein kann, zugeleitet. Ausgangsseitig gibt diese ein weiteres eingangsseitiges Regelsignal LW12 ab, das einem weiteren Regler RGW zugeführt wird, der wie die Regler RG1, RG2, RG, RG1, RG2 aufgebaut sein kann und die weiteren ausgangsseitigen Regelsignale STW1, STW2 abgibt. Die korrelierenden Elemente ME1, ME2 und der an ihren Ausgängen angeschlossene weitere Subtrahierer SUBEDW können zu einer korrelierenden Subtraktionseinheit SEW zusammengefaßt werden, welche jedoch auch anders aufgebaut sein kann.

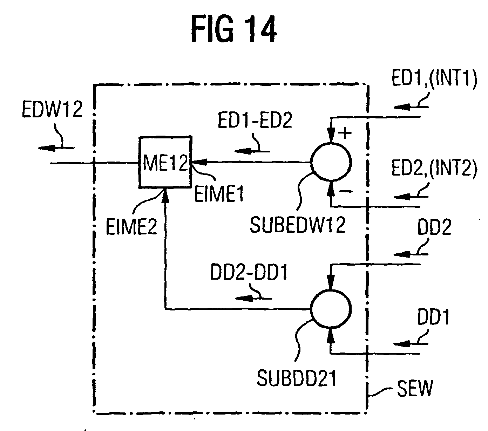

Eine beispielhafte andere Ausführung der korrelierenden Subtraktionseinheit SEW ist in **Figur 14** dargestellt. Die detektierten Signale ED1, ED2 werden in einem prizipiell wie der erste Subtrahierer SUBED12 auszulegendem, jedoch wegen anschließender Korrelation ausreichend breitbandig auszulegendem weiteren Subtrahierer SUBEDW12 subtrahiert, so daß ein weiteres detektiertes Signal ED1-ED2 entsteht. Dieses wird einem ersten Eingang EIME1 eines weiteren korrelierenden Elements ME12, welches wie korrelierende Elemente ME1, ME2 ausgelegt sein kann, zugeleitet. Die Datenausgangssignale DD2, DD1 werden in einem zusätzlichen Subtrahierer SUBDD21 subtrahiert, so daß ein im Falle zweiwertiger Datenausgangssignale DD2, DD1 vorzugsweise dreiwertiges weiteres Datenausgangssignal DD2-DD1 entsteht. Dieses wird einem zweiten Eingang EIME2 des weiteren korrelierenden Elements ME12 zugeleitet. An seinem Ausgang gibt das weitere korrelierende Element ME12 das zusätzliche als Korrelationssignal ausgebildete verarbeitbare Signal EDW12 ab.

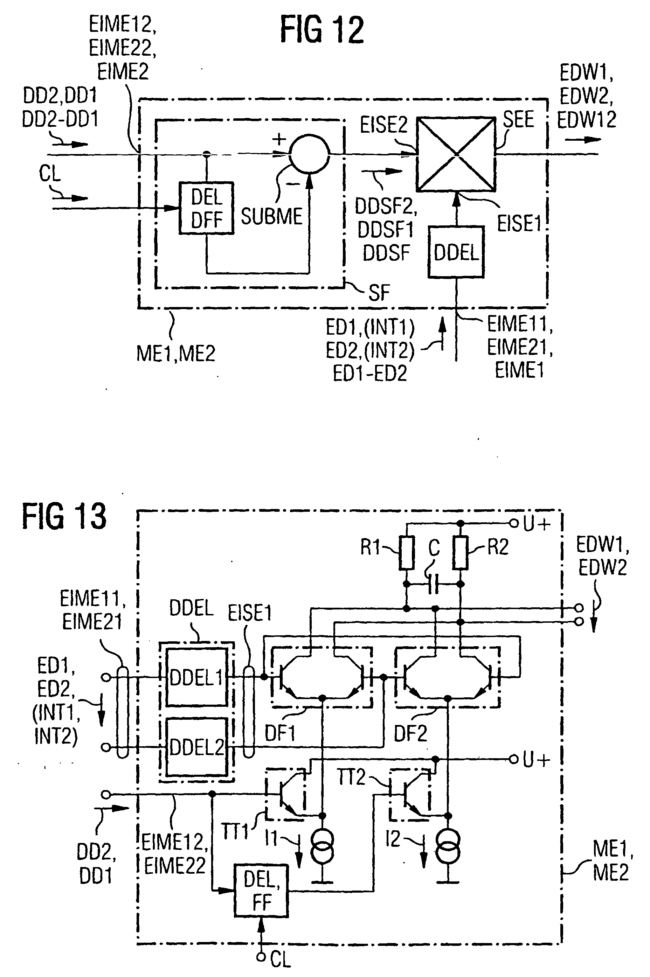

Der Aufbau eines korrelierenden Elements ME1, ME2, ME12 ist in **Figur 12** dargestellt. Das detektierte Signal ED1, ED2, ED1-ED2, welches die Interferenz INT1, INT2 enthält, wird über den ersten Korrelationseingang EIME11, EIME21, EIME1 einem ersten Schaltelementeingang EISE1 eines vorzugsweise als Multiplizierer ausgebildeten Schaltelements SEE zugeführt. Die der Polarisationsmodendispersion zuzurechnenden Anteile der Interferenzen INT1, INT2 entstehen vorzugsweise an den Übergängen benachbarter Informationsbits der sendeseitigen Modulationssignale SDD1, SDD2, und zwar mit Polaritäten, welche von der Richtung dieser Übergänge abhängen. Daher wird in einer vorteilhaften Ausgestaltung des erfinderischen Prinzips das empfangene und regenerierte Datenausgangssignal DD2, DD1, welches aus dem jeweils anderen detektierten Signal ED2, ED1, gewonnen wird, über den zweiten Korrelationseingang EIME12, EIME22 zunächst einem spektralen Formungselement SF zugeleitet. Im Fall des weiteren korrelierenden Elements ME12 wird stattdessen das weitere Datenausgangssignal DD2-DD1 dem entsprechenden zweiten Korrelationseingang EIME2 zugeleitet. Das spektrale Formungselement SF besteht aus einem weiteren Subtrahierer SUBME, an dessen zwei Eingängen das jeweilige Datenausgangssignal DD2, DD1, DD2-DD1 direkt bzw. durch ein Verzögerungselement DEL verzögert angelegt werden. An seinem Ausgang, der auch ein Ausgang des spektralen Formungselements SF ist, gibt dieser weitere Subtrahierer SUBME ein spektral geformtes Signal DDSF2, DDSF1, DDSF ab, welches einem zweiten Schaltelementeingang EISE2 des Schaltelements SEE zugeleitet wird. Das spektrale Formungselement SF bildet in diesem Ausführungsbeispiel als spektral geformtes Signal DDSF2, DDSF1, DDSF wenigstens näherungsweise eine zeitliche Ableitung des jeweiligen Datenausgangssignals DD2, DD1, DD2-DD1 ist, also einer Hochpaßfilterung entspricht. Das Verzögerungselement DEL kann mit fester oder mit variabler Verzögerungszeit ausgelegt werden. Als Verzögerungszeit eignet sich eine kurze, beispielsweise eine Bitdauer oder weniger eines sendeseitigen Modulationssignals SDD1, SDD2 betragende Zeit, falls Verzerrungen durch kurze differentielle Verzögerungszeiten detektiert werden sollen, oder längere, eine oder gar mehrere dieser Bitdauern erreichende oder überschreitende Verzögerungszeiten, falls Verzerrungen durch längere differentielle Verzögerungszeiten detektiert werden sollen. Da das jeweilige Datenausgangssignal DD2, DD1, DD2-DD1, ein Digitalsignal ist, kann das Verzögerungselement DEL ebenfalls digital, insbesondere bei binärem Datenausgangssignal DD2, DD1 vorzugsweise binär arbeiten. Zwecks besserer Signalformung kann es z.B. als D-Flip-Flop DFF, welches von einer Flanke eines zugeführten Taktsignals CL gesteuert wird, ausgeführt werden. Auch eine Kette mehrerer D-Flip-Flops ist denkbar zur Vergrößerung der Verzögerungszeit des Verzögerungselements DEL. Im Fall eines dreiwertigen Datenausgangssignals DD2-DD1 ist dagegen eine analoge Ausführung des Verzögerungselements DEL, z.B. als Verzögerungsleitung, zu bevorzugen. Da das dem korrelierenden Element ME1, ME2, ME12 zugeführte Datenausgangssignal DD2, DD1, DD2-DD1 aus dem jeweiligen detektierten Signal ED2, ED1, ED1-ED2 nur verzögert gewonnen wird, in der Regel durch die unvermeidliche Verzögerungszeit des oder der Digitalempfänger D2, D1, und da es im spektralen Formungselement SF weiter verzögert wird, im Beispiel der Figur 12 im Mittel um die Hälfte der Verzögerungszeit des Verzögerungselements DEL, ist normalerweise ein Laufzeitabgleich zwischen den an erstem Schaltelementeingang EISE1 und zweitem Schaltelementeingang EISE2 des Schaltelements SEE eintreffenden Signalen erforderlich. Dies kann durch ein weiteres Verzögerungselement DDEL erfolgen, welches das jeweilige detektierte Signals ED1, ED2, ED1-ED2, vorzugsweise vor der Zuleitung zum Schaltelement SEE, verzögert. Das Schaltelement SEE und somit das korrelierende Element ME1, ME2, ME12 gibt ausgangsseitig das als Korrelationssignal ausgebildete verarbeitbare Signal EDW1, EDW2, EDW12 ab.
Alternative Ausgestaltungen der Erfindung können jeweils mehrere korrelierende Elemente für die Detektion jeder der Polarisationsmodendispersion anzeigenden Anteile der Interferenzen INT1, INT2, und/oder als feste oder variable Hochpaß-, Bandpaß- oder Tiefpaßfilter ausgebildete spektrale Formungselemente SF aufweisen.

Eine vorteilhafte praktische Ausgestaltung des korrelierenden Elements ME1, ME2, welche sich insbesondere für vorliegende binäre Datenausgangssignale DD2, DD1 eignet, zeigt **Figur 13**. Die Spannungsversorgung erfolgt durch eine Versorgungsspannung U+. Das jeweilige detektierte Signal ED1, ED2 liegt in differentieller Form vor. Nach Durchlaufen des weiteren Verzögerungselements DDEL, welches beispielsweise aus zwei gleich langen Verzögerungsleitungen DDEL1, DDEL2 besteht, erreicht es zwei Differenzverstärker DF1, DF2, welche eingangsseitig und ausgangsseitig mit entgegengesetzten Polaritäten parallelgeschaltet sind. Diese Differenzverstärker DF1, DF2 verstärken das jeweilige differentielle Eingangssignal, sofern sie von jeweils einem von zwei Strömen I1, I2, welche aus vorzugsweise gleich ausgebildeten Konstantstromquellen erzeugt werden, durchflossen werden. Ein erster Schalttransistor TT1 leitet jedoch den ersten Strom 11 ab, wenn seiner Basis ein - hier für diese Funktionsweise positiven Pegel erforderndes - Datenausgangssignal DD2, DD1, das aus dem jeweils anderen detektierten Signal ED2, ED1 gewonnen wird, zugeleitet wird. Ein zweiter Schalttransistor TT2 leitet den zweiten Strom I2 ab, wenn seiner Basis dieses zuvor im Verzögerungselement DEL verzögerte Datenausgangssignal DD2, DD1, das aus dem jeweils anderen der ersten und zweiten detektierten Signale ED1, ED2 detektierten Signal ED2, ED1 gewonnen wird, zugeleitet wird. Als differentielle Ausgangsspannung der parallelgeschalteten Differenzverstärker DF1, DF2 entsteht als Differenzspannung zwischen vorzugsweise gleich ausgebildeten Widerständen R1, R2 das weitere, als Korrelationssignal ausgebildete verarbeitbare Signal EDW1, EDW2. Ein zwischen den parallelgeschalteten Ausgängen der Differenzverstärker DF1, DF2 angebrachter Kondensator C dient bereits als Tiefpaßfilter, welches zumindest teilweise das Filter LED1, LED2 darstellt. In Figur 13 sind der weitere Subtrahierer SUBME, das Schaltelement SEE und das durch den Kondensator C zumindest teilweise gebildete Filter LED1, LED2 nicht voneinander zu trennen, was in vorteilhafter Weise zu reduzierter Komplexität und höherer verarbeitbarer Datenrate führt.

Variationen des erfinderischen Prinzips sind dadurch möglich, daß das spektrale Formungselement SF entfällt, daß das Schaltelement SEE anders als als Multiplizierer ausgebildet wird, daß es an seinem zweiten Eingang ein Signal DDSF2, DDSF1, welches nicht oder nicht nur aus demjenigen Datenausgangssignal DD2, DD1, welches aus dem jeweils anderen detektierten Signal ED2, ED1 gewonnen wird, gewonnen wird, sondern beispielsweise auch aus demjenigen Datenausgangssignal DD1, DD2, das aus dem dem ersten Eingang des Schaltelements zugeführten detekierten Signal ED1, ED2 gewonnen wird, und/oder mindestens einem detektierten Signal ED1, ED2. Ein solches Beispiel wurde bereits durch die in **Figur 14** dargestellte Ausführung der korrelierenden Subtraktionseinheit SEW gegeben.

Die Ausführungsbeispiele der Erfindung gemäß Figuren 10 bis 14 beruhen, soweit bisher beschrieben, darauf, daß die den Digitalempfängern D1, D2 entnommenen Datenausgangssignale DD1, DD2 den sendeseitigen Modulationssignalen SDD1, SDD2 entsprechen. Insbesondere bei fehlerhaft eingestellten eingangsseitigen Polarisationstransformatoren PMDC, PMDC1, PMDC2 ist es jedoch möglich, daß dies nicht zutrifft, beispielsweise, weil die detektierten Signale ED1, ED2 nicht einmal näherungsweise den sendeseitigen Modulationssignalen SDD1, SDD2 entsprechen, oder weil beide detektierten Signale ED1, ED2 jeweils demselben sendeseitigen Mödulationssignal SDD1, SDD2 entsprechen. Um solche Fälle auszuschließen, kann der weitere Regler RGW1, RGW2, RGW bei Vorliegen solcher Fälle die weiteren ausgangsseitigen Regelsignale STW1, STW2 so variieren, daß der oder die eingangsseitigen Polarisationstransformatoren PMDC1, PMDC2, PMDC in verschiedene Zustände gebracht werden. Dies kann es auch erfordern, daß gleichzeitig die von den Reglern RG1, RG2, RG abgegebenen ausgangsseitigen Regelsignale ST1, ST2 variiert werden. Dies wird so lange in systematischer oder zufälliger Weise durchgeführt, bis mindestens eines, vorzugsweise aber beide aus den Digitalempfängern D1, D2 gewonnenen Datenausgangssignale DD1, DD2 wenigstens näherungsweise den jeweiligen sendeseitigen Modulationssignalen SDD1, SDD2 entsprechen.
Alternativ oder zusätzlich zu diesem können weitere Methoden zur Ermittlung von durch Polarisationsmodendispersion verursachten Verzerrungen, genannt PMD-Verzerrungen, eingesetzt werden. In Figur 10 sind zu diesem Zweck Verzerrungsanalysatoren DANA1, DANA2 vorgesehen, denen die detektierten Signale ED1, ED2 zugeführt werden. Die Verzerrungsanalysatoren DANA1, DANA2 ermitteln z.B. durch ein oder mehrere Hochpaß- oder Bandpaßfilter Spektralanteile der detektierten Signale, die auch aufsummiert werden können, und als jeweils mindestens ein Verzerrungssignal SDANA1, SDANA2 dem weiteren Regler RGW1, RGW2, RGW zugeleitet werden. Abfallen insbesondere der hochfrequenten Spektralanteile der detektierten Signale ED1, ED2 zeigt eine Fehleinstellung des oder der eingangsseitigen Polarisationstransformatoren PMDC, PMDC1, PMDC2 an, so daß diese vom weiteren Regler RGW1, RGW2, RGW so eingestellt werden können, daß PMD-Verzerrungen vermieden werden. Diese Art der hier nur hilfsweise eingesetzten Verfahrens zur Kompensation von Polarisationsmodendispersion ist zwar prinzipiell schon bekannt, beispielsweise aus der europäischen Patentanmeldung EP 0 909 045 A2 und aus IEEE J. Lightwave Technology, 17(1999)9, S. 1602-1616; neu ist jedoch ihre Anwendung auf Polarisationsmultiplexsignale. Sobald mindestens eines, vorzugsweise aber beide aus den Digitalempfängern D1, D2 gewonnenen Datenausgangssignale DD1, DD2 wenigstens näherungsweise den jeweiligen sendeseitigen Modulationssignalen SDD1, SDD2 entsprechen, schaltet der Regler RGW1, RGW2, RGW um, so daß erfindungsgemäß das ihm ebenfalls zugeführte, aus Detektion einer Interferenz INT1, INT2 hervorgegangene eingangsseitige Regelsignal LW1, LW2, LW zur Gewinnung des oder der ausgangsseitigen Regelsignale STW1, STW2 eingesetzt wird.
Bei Veränderung eines weiteren ausgangsseitigen Steuersignals STW1, STW2 verändert sich die Polarisationstransformation eines eingangsseitigen Polarisationstransformators PMDC, PMDC1, PMDC2. Dies erfordert i.a. auch ein Nachregeln eines der ausgangsseitigen Polarisationstransformatoren SPT, SPT1, SPT2. Um dieses Nachregeln möglichst schnell zu gestalten, bilden im weiteren Signalverarbeitungsmodul DRW die weiteren Regler RGW1, RGW2 in Figur 10 und der weitere Regler RGW in Figur 11 jeweils ein Informationsübertragungssignal ITS1, ITS2, ITS aus. Dieses wird im Signalverarbeitungsmodul DRW jeweils den Reglern RG1, RG2 in Figur 3 und dem Regler RG in Figur 5 zugeleitet, welche aufgrund dieser Informationsübertragungssignale ITS1, ITS2, ITS die von ihnen abgegebenen ausgangsseitigen Regelsignale STW1, STW2 zum Nachregeln der ausgangsseitigen Polarisationstransformatoren SPT, SPT1, SPT2 verändern.

Erfinderischer Gedanke ist es stets, auftretende Interferenz INT1, INT2 der beiden optischen Teilsignale OS1, OS2 zu detektieren. Deshalb ist die Erfindung für alle Einsatzfälle geeignet, in welchen solche Interferenz INT1, INT2 vorliegt. Dazu gehört das Non-Return-to-Zero-Signalformat, abgekürzt NRZ. Auch das Return-to-Zero-Signalformat, abgekürzt RZ, kommt in Frage, sofern sich die RZ-Impulse der beiden Polarisationsmultiplex-Kanäle überlappen. Falls diese abwechselnd erfolgen, so daß zwischen.zwei benachbarten RZ-Impulsen eines Kanals je ein RZ-Impuls des anderen Kanals liegt, gibt es jedoch keine Interferenz, falls die Impulsdauer jeweils kürzer als eine halbe Symboldauer beträgt. Dennoch kann die Erfindung selbst in diesen Fällen nutzbringend eingesetzt werden, und zwar zur Steuerung eines PMD-Kompensators, der diesen günstigen interferenzfreien Zustand herstellt.

### Bezugszeichenliste

- LA: Sendelaser
- FM: Optische Frequenzmodulation
- FMS: Frequenzmodulationssignal
- PMC: Sendeseitiger Leistungsteiler
- MO1, MO2: Modulatoren
- SDD1, SDD2: sendeseitige Modulationssignale
- DD1, DD2, DD2-DD1: Datenausgangssignale
- OS1, OS2: Optische Teilsignale
- PDM1, PDM2, PDM12, PDM21, PDM0, PDML: Phasendifferenzmodulierende Mittel
- PHMO1, PHMO2: Winkelmodulator
- PBSS: Sendeseitiger Polarisationsstrahlteiler
- PHMO12: Differentieller Winkelmodulator
- DPM: Differentielle Phasenmodulation
- FD: Frequenzdifferenz
- DT1, DT2: Laufzeiten
- |DT1-DT2|: Laufzeitdifferenzbetrag
- TX1, TX2: Optische Sender
- LWL: Lichtwellenleiter
- RX: Empfänger
- EI: Eingang
- SD: Separator/Detektor
- L1, L2, L12, LW1, LW2, LW12, ST1, ST2, STW1, STW2: Regelsignale
- L1, L2, L12, LW1, LW2, LW12: Eingangsseitige Regelsignale
- ST1, ST2, STW1, STW2: Ausgangsseitige Regelsignale
- RG1, RG2, RG, RGW1, RGW2, RGW: Regler
- ED1, ED2, ED1-ED2: Detektierte Signale
- EDV1, EDV2, EDV12, EDW1, EDW2, EDW12: Verarbeitbare Signale
- D1, D2: Digitalempfänger
- DR, DRW: Signalverarbeitungsmodul
- LED1, LED2, LED12, LEDOMn (n = 0, 1, 2, ...): Filter
- FIO1, FIO2, FIO12, FIOOMn: spektrale Teilsignale
- SUBED12, SUBME, SUBEDW, SUBEDW12, SUBDD21: Subtrahierer
- DET1, DET2, DET12, DETOMn, DETOMmn (m, n = 0, 1, 2, ...): Detektor
- LPF1, LPF2, LPF12: Tiefpaßfilter
- PD11, PD21: Photodetektoren
- EPBS, EPBS1, EPBS2: Fest; polarisierende Elemente
- PT, PT1, PT2: Steuerbare Polarisationstransformatoren
- PMDC, PMDC1, PMDC2: Eingangsseitige Polarisationstransformatoren, PMD-Kompensatoren
- SPT, SPT1, SPT2: Ausgangsseitige Polarisationstransformatoren
- SUB, SUB1, SUB2: Steuerbare polarisierende Elemente
- OUT1, OUT2: Signalanteile
- TE: Empfängerseitiger Leistungsteiler
- x, y: Koordinaten für horizontale/vertikale Polarisation
- FE1, FE2, FE12, FEW1, FEW2, FEW12: Filtereinheit
- OM: Modulationsfrequenz
- n*OM (n = 0, 1, 2, ...): Vielfache der Modulationsfrequenz
- LOMn: Leistungsübertragungsfaktoren
- Gn: Gewichte
- SOMn, SOMmn: Momente zweiter Ordnung
- F: Funktion
- ADD: Addierer
- SE: Subtrahiereinheit
- PEVEN: erste Leistung
- PODD: zweite Leistung
- PEVEN+PODD: Summe von PEVEN und PODD
- ME1, ME2, ME12: korrelierende Elemente
- EIME11, EIME21, EIME1, EIME12, EIME22, EIME2: Korrelationseingänge
- SEW: korrelierende Subtraktionseinheit
- SEE: Schaltelement
- EISE1, EISE2: Schaltelementeingänge
- DEL, DDEL: Verzögerungsglieder
- CL: Taktsignal
- DFF: D-Flip-Flop
- DF1, DF2: Differenzverstärker
- TT1, TT2: Schalttransistoren
- I1, I2: Ströme
- R1, R2: Widerstände
- C: Kondensator
- U+: Versorgungsspannung
- DANA1, DANA2: Verzerrungsanalysatoren
- SDANA1, SDANA2: Verzerrungssignale

## Patentansprüche

1. Anordnung für eine optische Informationsübertragung mit verschieden polarisierten optischen Teilsignale (OS1, OS2), mit einem steuerbaren polarisierenden Element (SUB), das ausgangsseitig mindestens eines dieser optischen Teilsignale (OS1, OS2) abgibt,
**dadurch gekennzeichnet,**
**daß** mindestens ein Signalverarbeitungsmodul (DR, DRW) vorgesehen ist, welches so ausgestaltet ist eine auftretende Interferenz (INT1, INT2) zwischen diesen optischen Teilsignalen (OS1, OS2) zu detektieren daraus mindestens ein Regelsignal (L1, L2, L12, LW1, LW2, LW12, ST1, ST2, STW1, STW2) zu bilden, das zur Steuerung dieses steuerbaren polarisierenden Elementes (SUB, SUB1, SUB2) verwendet wird.

2. Anordnung nach Anspruch 1,
**dadurch gekennzeichnet,**
**daß** das Signalverarbeitungsmodul (DR, DRW) mindestens einen Regler (RG1, RG2, RG, RGW1, RGW2, RGW) aufweist so ausgestaltet daß, der an seinem Eingang mindestens ein Regelsignal (L1, L2, L12, LW1, LW2, LW12), welches ein eingangsseitiges Regelsignal (L1, L2, L12, LW1, LW2, LW12) ist, aufweist, und an seinem Ausgang mindestens ein Regelsignal (ST1, ST2, STW1, STW2), welches ein ausgangsseitiges Regelsignal (ST1, ST2, STW1, STW2) ist, abgibt und dem steuerbaren polarisierenden Element (SUB, SUB1, SUB2) zuleitet.

3. Anordnung nach Anspruch 1 oder 2,
**dadurch gekennzeichnet,**
**daß** das steuerbare polarisierende Element (SUB, SUB1, SUB2) einen von einem festen polarisierenden Element (EPBS, EPBS1, EPBS2) gefolgten steuerbaren Polarisationstransformator (PT, PT1, PT2) aufweist.

4. Anordnung nach Anspruch 3,
**dadurch gekennzeichnet,**
**daß** der steuerbare Polarisationstransformator (PT, PT1, PT2) einen eingangsseitigen, als zur PMD-Kompensation geeignet ausgebildeten Polarisationstransformator (PMDC, PMDC1, PMDC2) aufweist, der von einem ausgangsseitigen Polarisationstransformator (SPT, SPT1, SPT2) gefolgt wird.

5. Anordnung nach einem der Ansprüche 1 bis 4,
**dadurch gekennzeichnet,**
**daß** ein phasendifferenzmodulierendes Mittel (PDM1, PDM2, PDM12, PDM21, PDM0, PDML) vorgesehen ist, so ausgestaltet daß, das eine differentielle Phasenmodulation (DPM) zwischen optischen Teilsignalen (OS1, OS2) erzeugt wird.

6. Anordnung nach Anspruch 5,
**dadurch gekennzeichnet,**
**daß** das phasendifferenzmodulierende Mittel (PDM1, PDM2, PDM12, PDM21, PDM0, PDML) so ausgestaltet ist daß die differentielle Phasenmodulation (DPM) so ausprägt, daß das eingangsseitige Regelsignal (L1, L2, L12, LW1, LW2, LW12) wenigstens näherungsweise unabhängig von einem statischen Differenzphasenwinkel (EPS) zwischen diesen optischen Teilsignalen (OS1, OS2) ausbildbar ist.

7. Anordnung nach Anspruch 5 oder 6,'
**dadurch gekennzeichnet,**
**daß** das phasendifferenzmodulierende Mittel (PDM0) so ausgestaltet ist eine Frequenzmodulation (FM) eines Sendelasers (LA) zu erzeugen, welche aufgrund eines Laufzeitdifferenzbetrags (|DT1-DT2|) zwischen Aufteilung des optischen Signals des Sendelasers (LA) in einem sendeseitigen Leistungsteiler (PMC) und Zusammenführung mit orthogonalen Polarisationen der **dadurch** gebildeten optischen Teilsignale (OS1, OS2) die differentielle Phasenmodulation (DPM) zwischen diesen optischen Teilsignale (OS1, OS2) erzeugt.

8. Anordnung nach einem der Ansprüche 1 bis 7,
**dadurch gekennzeichnet,**
**daß** dem steuerbaren polarisierenden Element (SUB, SUB1, SUB2) mindestens ein Photodetektor (PD11, PD21) nachgeordnet ist, welches so ausgestaltet ist daß eingangsseitig ein Signalanteil (OUT1, OUT2), welcher von dem steuerbaren polarisierenden Element (SUB, SUB1, SUB2) ausgangsseitig abgegeben wird, zugeführt wird und welcher mindestens ein detektiertes Signal (ED1, ED2, ED1-ED2) erzeugt, in welchem sich diese Interferenz (INT1, INT2) manifestiert.

9. Anordnung nach Anspruch 8,
**dadurch gekennzeichnet,**
**daß** in dem Signalverarbeitungsmodul (DR, DRW) ein Filter (LED1, LED2, LED12, LED, LEDOMn mit ganzzahligem n) vorgesehen ist, welches so ausgestaltet ist mindestens ein spektrales Teilsignal (FIO1, FIO2, FIO12, FIOOMn mit ganzzahligen n) mindestens eines verarbeitbaren Signals (EDV1, EDV2, EDV12, EDW1, EDW2, EDW12) zu durchlaßen, das aus dem detektierten Signal (ED1, ED2, ED1-ED2) erzeugt wird.

10. Anordnung nach Anspruch 8 oder 9,
**dadurch gekennzeichnet,**
**daß** in diesem Signalverarbeitungsmodul (DR, DRW) ein Detektor (DET1, DET2, DET12, DET, DETOMn, DETOMmn mit ganzzahligen m, n) vorgesehen ist, welcher so ausgestaltet ist daß der wenigstens teilweise das eingangsseitige Regelsignal (L1, L2, L12, LW1, LW2, LW12) zur Verfügung stellt, welches wenigstens näherungsweise eine Funktion (F), welche vorzugsweise eine lineare Funktion oder eine Wurzelfunktion ist, mindestens eines Moments zweiter Ordnung (SOM2, SOM4, SOM3, SOM1, SOM12, SOMn, SOMmn mit ganzzahligen m, n) wenigstens eines spektralen Teilsignals (FIO1, FIO2, FIO12, FIOOMn, mit ganzzahligem n) ist.

11. Anordnung nach Anspruch 10,
**dadurch gekennzeichnet,**
**daß** der Detektor (DET, DETOM12, DETOMmn mit ganzzahligen m, n) ein als gemischt ausgebildetes Moment zweiter Ordnung (SOM12, SOMmn mit ganzzahligen m, n) zweier unterschiedlicher spektraler Teilsignale (FIO1, FIO2, FIO12, FIOOMn mit ganzzahligem n) erzeugt.

12. Anordnung nach Anspruch 10 oder 11,
**dadurch gekennzeichnet,**
**daß** der Detektor (DET1, DET2, DET12, DET, DETOMn) ein Moment zweiter Ordnung (SOM2, SOM4, SOM3, SOM1, SCM12, SOMn, SOMmn mit ganzzahligen m, n) eines spektralen Anteils (FIO1, FIO2, FIO12, FIOOMn mit ganzzahligem n) erzeugt, welches ein Maß für die Leistung des spektralen Anteils (FIO1, FIO2, FIO12, FIOOMn mit ganzzahligem n) ist.

13. Anordnung nach einem der Ansprüche 9 bis 12,
**dadurch gekennzeichnet,**
**daß** das Filter (LED1, LED2, LED12, LED, LEDOMn mit ganzzahligem n) so ausgestaltet ist einen Fourierkoeffizienten des verarbeitbaren Signals (EDV1, EDV2, EDV12, EDW1, EDW2, EDW12) als spektrales Teilsignal (FIO1, FIO2, FIO12, FIOOMn mit ganzzahligen n) passieren zu lassen, wobei vor der Bildung als gemischt ausgebildeter zweiter Momente (SOM12, SOMmn mit ganzzahligen m, n) eine Laufzeitkompensation durchführbar ist.

14. Anordnung nach einem der Ansprüche 9 bis 13,
**dadurch gekennzeichnet,**
**daß** das Signalverarbeitungsmodul (DR) so ausgestaltet ist ein als detektiertes Signal (ED1, ED2, ED1-ED2) ausgebildetes verarbeitbares Signal (EDV1, EDV2, EDV12) zu verarbeiten und ein ausgangsseitiges Regelsignal (ST1, ST2) abzugeben, das den ausgangsseitigen Polarisationstransformator (SPT, SPT1, SPT2) ansteuert.

15. Anordnung nach einem der Ansprüche 9 bis 13,
**dadurch gekennzeichnet,**
**daß** das Signalverarbeitungsmodul (DRW) ein korrelierendes Element (ME1, ME2, ME12) aufweist, welches so ausgestaltet ist das detektierte Signal (ED1, ED2, ED1-ED2) mit mindestens einem spektralen Anteil mindestens eines Datenausgangssignals (DD1, DD2) zu korrelieren und ein als Korrelationssignal ausgebildetes verarbeitbares Signal (EDW1, EDW2, EDW12) abzugeben,
**daß** das Signalverarbeitungsmodul (DRW) so ausgestaltet ist dieses als Korrelationssignal ausgebildete verarbeitbare Signal (EDW1, EDW2, EDW12) zu verarbeiten und ein ausgangsseitiges Regelsignal (STW1, STW2) abzugeben das den eingangsseitigen Polarisationstransformator (PMDC, PMDC1, PMDC2) ansteuert.

16. Verfahren für eine optische Informationsübertragung mit verschieden polarisierten optischen Teilsignalen (OS1, OS2), mit einem steuerbaren polarisierenden Element (SUB), das ausgangsseitig mindestens eines dieser optischen Teilsignale (OS1, OS2) aufweist,
**dadurch gekennzeichnet,**
**daß** eine auftretende Interferenz (INT1, INT2) zwischen diesen optischen Teilsignalen (OS1, OS2) detektiert wird, daß daraus mindestens ein Regelsignal (L1, L2, L12, LW1, LW2, LW12, ST1, ST2, STW1, STW2) durch mindestens ein Signalverarbeitungsmodul (DR, DRW) gebildet wird, das zur Steuerung dieses steuerbaren polarisierenden Elementes (SUB, SUB1, SUB2) verwendet wird.

17. Verfahren nach Anspruch 16,
**dadurch gekennzeichnet,**
**daß** mindestens ein Regelsignal (L1, L2, L12, LW1, LW2, LW12), welches ein eingangsseitiges Regelsignal (L1, L2, L12, LW1, LW2, LW12) eines Reglers (RG1, RG2, RG, RGW1, RGW2, RGW) ist, einem Eingang des Regler (RG1, RG2, RG, RGW1, RGW2, RGW) zugeleitet wird, daß mindestens ein Regelsignal (ST1, ST2, STW1, STW2) von dem Regler (RG1, RG2, RG, RGW1, RGW2, RGW) abgegeben wird, welches ein ausgangsseitiges Regelsignal (ST1, ST2, STW1, STW2) ist, und dem steuerbaren polarisierenden Element (SUB, SUB1, SUB2) zuleitet wird.

18. Verfahren nach einem der Ansprüche 16 oder 17,
**dadurch gekennzeichnet,**
**daß** als steuerbares polarisierendes Element (SUB, SUB1, SUB2) ein festes polarisierendes Element (EPBS, EPBS1, EPBS2) mit einem diesem gefolgten steuerbaren Polarisationstransformator (PT, PT1, PT2) verwendet wird.

19. Verfahren nach Anspruch 18,
**dadurch gekennzeichnet,**
**daß** als steuerbarer Polarisationstransformator (PT, PT1, PT2) ein zur ein PMD-Kompensation geeigneter ausgebildeter Polarisationstransformator mit einem nachgeschalteten ausgangsseitigen Polarisationstransformator (SPT, SPT1, SPT2) verwendet wird.

20. Verfahren nach einem der Ansprüche 16 bis 19,
**dadurch gekennzeichnet,**
**daß** eine differentielle Phasenmodulation (DPM) zwischen den optischen Teilsignalen (OS1, OS2) erzeugt wird.

21. Verfahren nach Anspruch 20,
**dadurch gekennzeichnet,**
**daß** die differentielle Phasenmodulation (DPM) zu Beginn der Informationsübertragung erzeugt wird.

22. Verfahren nach Anspruch 21,
**dadurch gekennzeichnet,**
**daß** die differentielle Phasenmodulation (DPM) so ausprägt wird, daß das eingangsseitiges Regelsignal (L1, L2, L12, LW1, LW2, LW12) wenigstens näherungsweise unabhängig von einem statischen Differenzphasenwinkel (EPS) zwischen diesen optischen Teilsignalen (OS1, OS2) ausgebildet wird.

23. Verfahren nach einem der Ansprüche 20 bis 22,
**dadurch gekennzeichnet,**
**daß** eine Frequenzmodulation (FM) eines Sendelasers (LA) erzeugt wird, welche aufgrund eines Laufzeitdifferenzbetrags (|DT1-DT2|) zwischen Aufteilung des optischen Signals des Sendelasers (LA) in einem sendeseitigen Leistungsteiler (PMC) und Zusammenführung mit orthogonalen Polarisationen der **dadurch** gebildeten optischen Teilsignale (OS1, OS2) die differentielle Phasenmodulation (DPM) zwischen diesen optischen Teilsignale (OS1, OS2) erzeugt.

24. verfahren nach einem der Ansprüche 16 bis 23.
**dadurch gekennzeichnet,**
**daß** dem steuerbaren polarisierenden Element (SUB, SUB1, SUB2), welches mindestens einen Signalanteil (OUT1, OUT2) abgibt, mindestens ein Photodetektor (PD11, PD21) je Signalanteil (OUT1, OUT2) nachgeordnet wird, wobei dieser Photodetektor (PD11, PD21) ein detektiertes Signal (ED1, ED2, ED1-ED2) erzeugt, in welchem sich die Interferenz (INT1, INT2) manifesti-ert zuleitbar ist.

25. Verfahren nach Anspruch 24,
**dadurch gekennzeichnet,**
**daß** mindestens ein spektrales Teilsignal.(FIO1, FIO2, FIO12, FIOOMn mit ganzzahligen n) mindestens eines verarbeitbaren Signals (EDV1, EDV2, EDV12, EDW1, EDW2, EDW12), das aus dem detektierten Signal (ED1, ED2, ED1-ED2) erzeugt wird, von einem Filter (LED1, LED2, LED12, LED, LEDOMn mit ganzzahligem n) durchgelassen wird.

26. Verfahren nach Anspruch 24 oder 25,
**dadurch gekennzeichnet,**
**daß** das eingangsseitige Regelsignal (L1, L2, L12, LW1, LW2, LW12) wenigstens teilweise einem Detektor (DET1, DET2, DET12, DET, DETOMn, DETOMmn mit ganzzahligen m, n) zugeführt wird, welcher das eingangsseitige Regelsignal (L1, L2, L12, LW1, LW2, LW12) so ausbildet, daß es wenigstens näherungsweise eine Funktion (F), welche vorzugsweise eine lineare Funktion oder eine Wurzelfunktion ist, mindestens eines Moments zweiter Ordnung (SOM2, SOM4, SOM3, SOM1, SOM12, SOMn, SOMmn mit ganzzahligen m, n) wenigstens eines spektralen Teilsignals (FIO1, FIO2, FIO12, FIOOMn, mit ganzzahligem n) ist.

27. Verfahren nach Anspruch 26,
**dadurch gekennzeichnet,**
**daß** ein als gemischt ausgebildetes Moment zweiter Ordnung (SOM12, SOMmn mit ganzzahligen m, n) aus zwei unterschiedlichen spektralen Teilsignalen (FIO1, FIO2, FIO12, FIOOMn mit ganzzahligem n) durch den Detektor (DET, DETOM12, DETOMmn mit ganzzahligen m, n) erzeugt wird.

28. Verfahren nach Anspruch 26 oder 27,
**dadurch gekennzeichnet,**
**daß** ein Moment zweiter Ordnung (SOM2, SOM4, SOM3, SOM1, SOM12, SOMn, SOMmn mit ganzzahligen m, n) eines spektralen Anteils (FIO1, FIO2, FIO12, FIOOMn mit ganzzahligem n) durch den Detektor (DET1, DET2, DET12, DET, DETOMn) erzeugt wird und ein Maß für eine Leistung des spektralen Anteils (FIO1, FIO2, FIO12, FIOOMn mit ganzzahligem n) wird.

29. Verfahren nach einem der Ansprüche 25 bis 28,
**dadurch gekennzeichnet,**
**daß** ein Fourierkoeffizient dieses verarbeitbaren Signals (EDV1, EDV2, EDV12, EDW1, EDW2, EDW12) als spektrales Teilsignal (FIO1, FIO2, FIO12, FIOOMn mit ganzzahligen n) dieses detektierten Signals (ED1, ED2, ED1-ED2) gebildet wird, wobei vor der Bildung als gemischt ausgebildeter zweiter Momente (SOM12, SOMmn mit ganzzahligen m, n) eine Laufzeitkompensation durchgeführt wird.

30. Verfahren nach einem der Ansprüche 25 bis 29,
**dadurch gekennzeichnet,**
**daß** ein als detektiertes Signal (ED1, ED2, ED1-ED2) ausgebildetes verarbeitbares Signal (EDV1, EDV2, EDV12) im Signalverarbeitungsmodul (DR) verarbeitet wird, welches ein ausgangsseitiges Regelsignal (ST1, ST2) abgibt, das den ausgangsseitigen Polarisationstransformator (SPT, SPT1, SPT2) ansteuert

31. Verfahren nach einem der Ansprüche 25 bis 29,
**dadurch gekennzeichnet,**
**daß** das detektierte Signal (ED1, ED2, ED1-ED2) durch ein im das Signalverarbeitungsmodul (DRW) vorhandenes korrelierendes Element (ME1, ME2, ME12) mit mindestens einem spektralen Anteil mindestens eines Datenausgangssignals (DD1, DD2) korreliert wird,
**daß** ein beim Korrelieren erzeugtes, als Korrelationssignal ausgebildetes verarbeitbares Signal (EDW1, EDW2, EDW12) von dem Signalverarbeitungsmodul (DRW) verarbeitet wird,
**daß** ein beim Verarbeiten erzeugtes ausgangsseitiges Regelsignal (STW1, STW2) den eingangsseitigen Polarisationstransformator (PMDC, PMDC1, PMDC2) ansteuert.

## Claims

1. Arrangement for optical information transmission having differently polarized optical signal elements (OS1, OS2), having a controllable polarizing element (SUB) which, on the output side, emits at least one of these optical signal elements (OS1, OS2), **characterized in that** at least one signal processing module (DR, DRW) is provided, which is designed to detect any interference (INT1, INT2) which occurs between these optical signal elements (OS1, OS2), and uses this to form at least one control signal (L1, L2, L12, LW1, LW2, LW12, ST1, ST2, STW1, STW2), which is used to control this controllable polarizing element (SUB, SUB1, SUB2).

2. Arrangement according to Claim 1, **characterized in that** the signal processing module (DR, DRW) has at least one regulator (RG1, RG2, RG, RGW1, RGW2, RGW) which is designed such that, at its input, it has at least one control signal (L1, L2, L12, LW1, LW2, LW12), which is an input-side control signal (L1, L2, L12, LW1, LW2, LW12), and, at its output, it has at least one control signal (ST1, ST2, STW1, STW2), which is an output-side control signal (ST1, ST2, STW1, STW2), and passes this to the controllable polarizing element (SUB, SUB1, SUB2).

3. Arrangement according to Claim 1 or 2, **characterized in that** the controllable polarizing element (SUB, SUB1, SUB2) has a controllable polarization transformer (PT, PT1, PT2), which is followed by a fixed polarizing element (EPBS, EPBS1, EPBS2).

4. Arrangement according to Claim 3,
**characterized in that** the controllable polarization transformer (PT, PT1, PT2) has an input-side polarization transformer (PMDC, PMDC1, PMDC2), which is designed to be suitable for PMD compensation and is followed by an output-side polarization transformer (SPT, SPT1, SPT2).

5. Arrangement according to one of Claims 1 to 4, **characterized in that** a phase-difference-modulating means (PDM1, PDM2, PDM12, PDM21, PDM0, PDML) is provided, which produces differential phase modulation (DPM) between optical signal elements (OS1, OS2).

6. Arrangement according to Claim 5, **characterized in that** the phase-difference-modulating means (PDM1, PDM2, PDM12, PDM21, PDM0, PDML) produces the differential phase modulation (DPM) such that the input-side control signal (L1, L2, L12, LW1, LW2, LW12) is designed to be at least approximately independent of a steady-state difference phase angle (EPS) between these optical signal elements (OS1, OS2).

7. Arrangement according to Claim 5 or 6, **characterized in that** the phase-difference-modulating means (PDM0) produces frequency modulation (FM) on a transmission laser (LA), which frequency modulation (FM) produces the differential phase modulation (DPM) between these optical signal elements (OS1, OS2) on the basis of the magnitude of any delay time difference (|DT1-DT2|) between the splitting of the optical signal from the transmission laser (LA) in a transmission-end power splitter (PMC) and combination with orthogonal polarizations of the optical signal elements (OS1, OS2) formed in this way.

8. Arrangement according to one of Claims 1 to 7, **characterized in that** the controllable polarizing element (SUB, SUB1, SUB2) is followed by at least one photodetector (PD11, PD21) to the input side of which a signal component (OUT1, OUT2) is supplied which is emitted on the output side from the controllable polarizing element (SUB, SUB1, SUB2), and which produces at least one detected signal (ED1, ED2, ED1-ED2), in which this interference (INT1, INT2) is manifested.

9. Arrangement according to Claim 8, **characterized in that** a filter (LED1, LED2, LED12, LED, LEDOMn, where n is an integer) is provided in the signal processing module (DR, DRW) and passes at least one spectral signal element (FIO1, FIO2, FIO12, FIOOMn, where n is an integer), of at least one signal (EDV1, EDV2, EDV12, EDW1, EDW2, EDW12) which can be processed and is produced from the detected signal (ED1, ED2, ED1-ED2).

10. Arrangement according to Claim 8 or 9, **characterized in that** this signal processing module (DR, DRW) contains a detector (DET1, DET2, DET12, DET, DETOMn, DETOMmn, where m, n are integers) which at least partially provides the input-side control signal (L1, L2, L12, LW1, LW2, LW12), which is at least approximately a function (F), which is preferably a linear function or a square root function, of at least one second-order moment (SOM2, SOM4, SOM3, SOM1, SOM12, SOMn, SOMmn, where m, n are integers) of at least one spectral signal element (FIO1, FIO2, FIO12, FIOOMn, where n is an integer).

11. Arrangement according to Claim 10, **characterized in that** the detector (DET, DETOM12, DETOMmn, where m, n are integers) produces a second-order moment (SOM12, SOMmn, where m, n are integers), which is in mixed form, of two different spectral signal elements (FIO1, FIO2, FIO12, FIOOMn, where n is an integer).

12. Arrangement according to Claim 10 or 11, **characterized in that** the detector (DET1, DET2, DET12, DET, DETOMn) produces a second-order moment (SOM2, SOM4, SOM3, SOM1, SOM12, SOMn, SOMmn, where m, n are integers) of a spectral component (FIO1, FIO2, FIO12, FIOOMn, where n is an integer) which is a measure of the power of the spectral component (FIO1, FIO2, FIO12, FIOOMn, where n is an integer).

13. Arrangement according to one of Claims 9 to 12, **characterized in that** the filter (LED1, LED2, LED12, LED, LEDOMn, where n is an integer) passes a Fourier coefficient of the signal (EDV1, EDV2, EDV12, EDW1, EDW2, EDW12), which can be processed, as a spectral signal element (FIO1, FIO2, FIO12, FIOOMn where n is an integer), in which case delay time compensation can be carried out before the formation of second moments (SOM12, SOMmn, where m, n are integers) in mixed form.

14. Arrangement according to one of Claims 9 to 13, **characterized in that** the signal processing module (DR) processes a signal (EDV1, EDV2, EDV12) which is in the form of a detected signal (ED1, ED2, ED1-ED2) and can be processed, and emits an output-side control signal (ST1, ST2) which drives the output-side polarization transformer (SPT, SPT1, SPT2).

15. Arrangement according to one of Claims 9 to 13, **characterized in that** the signal processing module (DRW) has a correlating element (ME1, ME2, ME12), which correlates the detected signal (ED1, ED2, ED1-ED2) with at least one spectral component of at least one data output signal (DD1, DD2), and emits a signal (EDW1, EDW2, EDW12) which is in the form of a correlation signal and can be processed,
**in that** the signal processing module (DRW) processes this signal (EDW1, EDW2, EDW12), which is in the form of a correlation signal and can be processed, and emits an output-side control signal (STW1, STW2), which drives the input-side polarization transformer (PMDC, PMDC1, PMDC2).

16. Method for optical information transmission using differently polarized optical signal elements (OS1, OS2), and using a controllable polarizing element (SUB) which, on the output side, has at least one of these optical signal elements (OS1, OS2), **characterized in that** any interference (INT1, INT2) which occurs between these optical signal elements (OS1, OS2) is detected, and **in that** at least one control signal (L1, L2, L12, LW1, LW2, LW12, ST1, ST2, STW1, STW2) is formed from this by means of at least one signal processing module (DR, DRW), and is used to control this controllable polarizing element (SUB, SUB1, SUB2).

17. Method according to Claim 16, **characterized in that** at least one control signal (L1, L2, L12, LW1, LW2, LW12), which is an input-side control signal (L1, L2, L12, LW1, LW2, LW12) for a regulator (RG1, RG2, RG, RGW1, RGW2, RGW), is supplied to an input of the regulator (RG1, RG2, RG, RGW1, RGW2, RGW), and **in that** at least one control signal (ST1, ST2, STW1, STW2) is emitted from the regulator (RG1, RG2, RG, RGW1, RGW2, RGW), this being an output-side control signal (ST1, ST2, STW1, STW2), and is supplied to the controllable polarizing element (SUB, SUB1, SUB2).

18. Method according to one of Claims 16 or 17, **characterized in that** the controllable polarizing element (SUB, SUB1, SUB2) is a fixed polarizing element (EPBS, EPBS1, EPBS2) with a controllable polarization transformer (PT, PT1, PT2) following it.

19. Method according to Claim 18, **characterized in that** the controllable polarization transformer (PT, PT1, PT2) is a polarization transformer which is designed to be more suitable for PMD compensation and has a downstream output-side polarization transformer (SPT, SPT1, SPT2).

20. Method according to one of Claims 16 to 19, **characterized in that** differential phase modulation (DPM) is produced between the optical signal elements (OS1, OS2).

21. Method according to Claim 20, **characterized in that** the differential phase modulation (DPM) is produced at the start of information transmission.

22. Method according to Claim 21, **characterized in that** the differential phase modulation (DPM) is carried out such that the input-side control signal (L1, L2, L12, LW1, LW2, LW12) is formed at least approximately independently of any steady-state difference phase angle (EPS) between these optical signal elements (OS1, OS2).

23. Method according to one of Claims 20 to 22, **characterized in that** frequency modulation (FM) is produced for a transmission laser (LA) which frequency modulation (FM) produces the differential phase modulation (DPM) between the optical signal elements (OS1, OS2) on the basis of the magnitude of any delay time difference (|DT1-DT2|) between the splitting of the optical signal from the transmission laser (LA) in a transmission-end power splitter (PMC) and combination with orthogonal polarizations of these optical signal elements (OS1, OS2) formed in this way.

24. Method according to one of Claims 16 to 23, **characterized in that** the controllable polarizing element (SUB, SUB1, SUB2), which emits at least one signal component (OUT1, OUT2), is followed by at least one photodetector (PD11, PD21) for each signal component (OUT1, OUT2) with this photodetector (PD11, PD21) producing a detected signal (ED1, ED2, ED1-ED2), in which the interference (INT1, INT2) is manifested.

25. Method according to Claim 24, **characterized in that** at least one spectral signal element (FIO1, FIO2, FIO12, FIOOMn, where n is an integer) of at least one signal (EDV1, EDV2, EDV12, EDW1, EDW2, EDW12) which can be processed and is produced from the detected signal (ED1, ED2, ED1-ED2) is passed by a filter (LED1, LED2, LED12, LED, LEDOMn, where n is an integer).

26. Method according to Claim 24 or 25, **characterized in that** the input-side control signal (L1, L2, L12, LW1, LW2, LW12) is supplied at least partially to a detector (DET1, DET2, DET12, DET, DETOMn, DETOMmn, where m, n are integers), which forms the input-side control signal (L1, L2, L12, LW1, LW2, LW12) such that it is at least approximately a function (F), which is preferably a linear function or square root function, of at least one second-order moment (SOM2, SOM4, SOM3, SOM1, SOM12, SOMn, SOMmn, where m, n are integers) of at least one spectral signal element (FIO1, FIO2, FIO12, FIOOMn, where n is an integer).

27. Method according to Claim 26, **characterized in that** a second-order moment (SOM12, SOMmn, where m, n are integers), in mixed form, is produced from two different spectral signal elements (FIO1, FIO2, FIO12, FIOOMn, where n is an integer) by the detector (DET, DETOM12, DETOMmn, where m, n are integers).

28. Method according to Claim 26 or 27, **characterized in that** a second-order moment (SOM2, SOM4, SOM3, SOM1, SOM12, SOMn, SOMmn, where m, n are integers) of a spectral component (FIO1, FIO2, FIO12, FIOOMn, where n is an integer) is produced by the detector (DET1, DET2, DET12, DET, DETOMn), and is a measure of the power of the spectral component (FIO1, FIO2, FIO12, FIOOMn, where n is an integer).

29. Method according to Claims 25 to 28, **characterized in that** a Fourier coefficient of this signal (EDV1, EDV2, EDV12, EDW1, EDW2, EDW12), which can be processed, is used as the spectral signal element (FIO1, FIO2, FIO12, FIOOMn, where n is an integer) of this detected signal (ED1, ED2, ED1-ED2), with delay time compensation being carried out before the formation as second moments (SOM12, SOMmn, where m, n are integers) in mixed form.

30. Method according to one of Claims 25 to 29, **characterized in that** a signal (EDV1, EDV2, EDV12), which is the form of a detected signal (ED1, ED2, ED1-ED2) and is processed in the signal processing module (DR), which emits an output-side control signal (ST1, ST2) which drives the output-side polarization transformer (SPT, SPT1, SPT2).

31. Method according to one of Claims 25 to 29, **characterized in that** the detected signal (ED1, ED2, ED1-ED2) is correlated, by means of a correlating element (ME1, ME2, ME12) in the signal processing module (DRW), with at least one spectral component of at least one data output signal (DD1, DD2), **characterized in that** a signal (EDW1, EDW2, EDW12), which is produced during the correlation process, is in the form of a correlation signal and can be processed, is processed by the signal processing module (DRW), and **in that** an output-side control signal (STW1, STW2), which is produced during the processing, drives the input-side polarization transformer (PMDC, PMDC1, PMDC2).

## Revendications

1. Dispositif pour une transmission optique d'informations avec des signaux optiques partiels (OS1, OS2) polarisés différemment, avec un élément polarisant commandable (SUB) qui délivre au moins l'un de ces signaux optiques partiels (OS1, OS2) côté sortie,
**caractérisé en ce**
**qu'**est prévu au moins un module de traitement de signaux (DR, DRW) qui est réalisé de manière à détecter une interférence (INT1, INT2) qui survient entre ces signaux optiques partiels (OS1, OS2) et à constituer au moins un signal de réglage (L1, L2, L12, LW1, LW2, LW12, ST1, ST2, STW1, STW2) sur cette base, lequel est utilisé pour commander cet élément polarisant commandable (SUB, SUB1, SUB2).

2. Dispositif selon la revendication 1,
**caractérisé en ce**
**que** le module de traitement de signaux (DR, DRW) comporte au moins un régulateur (RG1, RG2, RG, RGW1, RGW2, RGW) réalisé de manière telle qu'il comporte, en son entrée, au moins un signal de réglage (L1, L2, L12, LW1, LW2, LW12), qui est un signal de réglage côté entrée (L1, L2, L12, LW1, LW2, LW12), et que, en sa sortie, il délivre au moins un signal de réglage (ST1, ST2, STW1, STW2), qui est un signal de réglage côté sortie (ST1, ST2, STW1, STW2), et l'amène à l'élément polarisant commandable (SUB, SUB1, SUB2).

3. Dispositif selon la revendication 1 ou 2,
**caractérisé en ce**
**que** l'élément polarisant commandable (SUB, SUB1, SUB2) comporte un transformateur de polarisation commandable (PT, PT1, PT2) suivi d'un élément polarisant stationnaire (EPBS, EPBS1, EPBS2).

4. Dispositif selon la revendication 3,
**caractérisé en ce**
**que** le transformateur de polarisation commandable (PT, PT1, PT2) comporte un transformateur de polarisation côté entrée (PMDC, PMDC1, PMDC2) réalisé de manière adaptée à la compensation de PMD, lequel est suivi d'un transformateur de polarisation côté sortie (SPT, SPT1, SPT2).

5. Dispositif selon l'une des revendications 1 à 4,
**caractérisé en ce**
**qu'**est prévu un moyen de modulation de différence de phase (PDM1, PDM2, PDM12, PDM21, PDM0, PDML) réalisé de manière telle qu'une modulation de phase différentielle (DPM) est produite entre les signaux optiques partiels (OS1, OS2).

6. Dispositif selon la revendication 5,
**caractérisé en ce**
**que** le moyen de modulation de différence de phase (PDM1, PDM2, PDM12, PDM21, PDM0, PDML) est réalisé de manière telle que la modulation de phase différentielle (DPM) est effectuée de manière telle que le signal de réglage côté entrée (L1, L2, L12, LW1, LW2, LW12) est réalisable au moins approximativement de manière indépendante d'un angle statique de phase différentielle (EPS) entre ces signaux optiques partiels (OS1, OS2).

7. Dispositif selon la revendication 5 ou 6,
**caractérisé en ce**
**que** le moyen de modulation de différence de phase (PDM0) est réalisé de manière à produire une modulation de fréquence (FM) d'un laser émetteur (LA), laquelle produit, sur la base d'une valeur absolue de différence de temps de propagation (|DT1-DT2|) entre répartition du signal optique du laser émetteur (LA) dans un diviseur de puissance côté émission (PMC) et regroupement avec polarisations orthogonales des signaux optiques partiels (OS1, OS2) ainsi constitués, la modulation de phase différentielle (DPM) entre ces signaux optiques partiels (OS1, OS2).

8. Dispositif selon l'une des revendications 1 à 7,
**caractérisé en ce**
**qu'**est situé, en aval de l'élément polarisant commandable (SUB, SUB1, SUB2), au moins un photodétecteur (PD11, PD21), lequel est réalisé de manière telle qu'une partie de signal (OUT1, OUT2), laquelle est délivrée côté sortie par l'élément polarisant commandable (SUB, SUB1, SUB2) est amenée côté entrée et lequel produit au moins un signal détecté (ED1, ED2, ED1-ED2) dans lequel cette interférence (INT1, INT2) se manifeste.

9. Dispositif selon la revendication 8,
**caractérisé en ce**
**qu'**est prévu, dans le module de traitement de signaux (DR, DRW), un filtre (LED1, LED2, LED12, LED, LEDOMn avec n étant un entier), lequel est réalisé de manière à laisser passer au moins un signal spectral partiel (FIO1, FIO2, FIO12, FIOOMn avec n étant un entier) d'au moins un signal traitable (EDV1, EDV2, EDV12, EDW1, EDW2, EDW12) qui est produit à partir du signal détecté (ED1, ED2, ED1-ED2).

10. Dispositif selon la revendication 8 ou 9,
**caractérisé en ce**
**qu'**est prévu, dans ce module de traitement de signaux (DR, DRW), un détecteur (DET1, DET2, DET12, DET, DETOMn, DETOMmn avec m, n étant des entiers), lequel est réalisé de manière telle qu'il met à disposition au moins en partie le signal de réglage côté entrée (L1, L2, L12, LW1, LW2, LW12), lequel est au moins approximativement une fonction (F), qui est de préférence une fonction linéaire ou une fonction de racine, d'au moins un moment de deuxième ordre (SOM2, SOM4, SOM3, SOM1, SOM12, SOMn, SOMmn avec m, n étant des entiers) d'au moins un signal spectral partiel (FIO1, FIO2, FIO12, FIOOMn avec n étant un entier).

11. Dispositif selon la revendication 10,
**caractérisé en ce**
**que** le détecteur (DET, DETOM12, DETOMmn avec m, n étant des entiers) produit un moment de deuxième ordre (SOM12, SOMmn avec m, n étant des entiers), réalisé mixte, de deux signaux spectraux partiels (FIO1, FIO2, FIO12, FIOOMn avec n étant un entier) différents.

12. Dispositif selon la revendication 10 ou 11
**caractérisé en ce**
**que** le détecteur (DET1, DET2, DET12, DET, DETOMn) produit un moment de deuxième ordre (SOM2, SOM4, SOM3, SOM1, SOM12, SOMn, SOMmn avec m, n étant des entiers) d'une partie spectrale (FIO1, FIO2, FIO12, FIOOMn avec n étant un entier), lequel est une mesure de la puissance de la partie spectrale (FIO1, FIO2, FIO12, FIOOMn avec n étant un entier).

13. Dispositif selon l'une des revendications 9 à 12,
**caractérisé en ce**
**que** le filtre (LED1, LED2, LED12, LED, LEDOMn avec n étant un entier) est réalisé de manière à laisser passer un coefficient de Fourier du signal traitable (EDV1, EDV2, EDV12, EDW1, EDW2, EDW12) en tant que signal spectral partiel (FIO1, FIO2, FIO12, FIOOMn avec n étant un entier), une compensation du temps de propagation pouvant être effectuée avant la constitution de deuxièmes moments (SOM12, SOMmn avec m, n étant des entiers) réalisés mixtes.

14. Dispositif selon l'une des revendications 9 à 13,
**caractérisé en ce**
**que** le module de traitement de signaux (DR) est réalisé de manière à traiter un signal traitable (EDV1, EDV2, EDV12) réalisé en tant que signal détecté (ED1, ED2, ED1-ED2) et à délivrer un signal de réglage côté sortie (ST1, ST2) qui commande le transformateur de polarisation côté sortie (SPT, SPT1, SPT2).

15. Dispositif selon l'une des revendications 9 à 13,
**caractérisé en ce**
**que** le module de traitement de signaux (DRW) comporte un élément corrélant (ME1, ME2, ME12) qui est réalisé de manière à corréler le signal détecté (ED1, ED2, ED1-ED2) avec au moins une partie spectrale d'au moins un signal de sortie de données (DD1, DD2) et à délivrer un signal traitable (EDW1, EDW2, EDW12) réalisé en tant que signal de corrélation,
**que** le module de traitement de signaux (DRW) est réalisé de manière à traiter ce signal traitable (EDW1, EDW2, EDW12) réalisé en tant que signal de corrélation et à délivrer un signal de réglage côté sortie (STW1, STW2) qui commande le transformateur de polarisation côté entrée (PMDC, PMDC1, PMDC2).

16. Procédé pour une transmission optique d'informations avec des signaux optiques partiels (OS1, OS2) polarisés différemment, avec un élément polarisant commandable (SUB) qui comporte au moins l'un de ces signaux optiques partiels (OS1, OS2) côté sortie,
**caractérisé en ce**
**qu'**une interférence (INT1, INT2) qui survient entre ces signaux optiques partiels (OS1, OS2) est détectée et qu'au moins un signal de réglage (L1, L2, L12, LW1, LW2, LW12, ST1, ST2, STW1, STW2) est constitué sur cette base par au moins un module de traitement de signaux (DR, DRW), lequel est utilisé pour commander cet élément polarisant commandable (SUB, SUB1, SUB2).

17. Procédé selon la revendication 16,
**caractérisé en ce**
**qu'**au moins un signal de réglage (L1, L2, L12, LW1, LW2, LW12), qui est un signal de réglage côté entrée (L1, L2, L12, LW1, LW2, LW12) d'un régulateur (RG1, RG2, RG, RGW1, RGW2, RGW) est amené à une entrée du régulateur (RG1, RG2, RG, RGW1, RGW2, RGW) et qu'au moins un signal de réglage (ST1, ST2, STW1, STW2) est délivré par le régulateur (RG1, RG2, RG, RGW1, RGW2, RGW), lequel est un signal de réglage côté sortie (ST1, ST2, STW1, STW2), et est amené à l'élément polarisant commandable (SUB, SUB1, SUB2).

18. Procédé selon l'une des revendications 16 ou 17,
**caractérisé en ce**
**qu'**est utilisé en tant qu'élément polarisant commandable (SUB, SUB1, SUB2) un élément polarisant stationnaire (EPBS, EPBS1, EPBS2) avec un transformateur de polarisation commandable (PT, PT1, PT2) suivi de celui-ci.

19. Procédé selon la revendication 18,
**caractérisé en ce**
**qu'**est utilisé, en tant que transformateur de polarisation commandable (PT, PT1, PT2), un transformateur, de polarisation réalisé de manière adaptée à une compensation de PMD, avec connecté en aval un transformateur de polarisation côté sortie (SPT, SPT1, SPT2).

20. Procédé selon l'une des revendications 16 à 19,
**caractérisé en ce**
**qu'**une modulation de phase différentielle (DPM) est produite entre les signaux optiques partiels (OS1, OS2).

21. Procédé selon la revendication 20,
**caractérisé en ce**
**que** la modulation de phase différentielle (DPM) est produite au début de la transmission d'informations.

22. Procédé selon la revendication 21,
**caractérisé en ce**
**que** la modulation de phase différentielle (DPM) est effectuée de manière telle que le signal de réglage côté entrée (L1, L2, L12, LW1, LW2, LW12) est réalisé au moins approximativement de manière indépendante d'un angle statique de phase différentielle (EPS) entre ces signaux optiques partiels (OS1, OS2).

23. Procédé selon l'une des revendications 20 à 22,
**caractérisé en ce**
**qu'**une modulation de fréquence (FM) d'un laser émetteur (LA) est produite, laquelle produit, sur la base d'une valeur absolue de différence de temps de propagation (|DT1-DT2|) entre répartition du signal optique du laser émetteur (LA) dans un diviseur de puissance côté émission (PMC) et regroupement avec polarisations orthogonales des signaux optiques partiels (OS1, OS2) ainsi constitués, la modulation de phase différentielle (DPM) entre ces signaux optiques partiels (OS1, OS2).

24. Procédé selon l'une des revendications 16 à 23,
**caractérisé en ce**
**qu'**est situé, en aval de l'élément polarisant commandable (SUB, SUB1, SUB2) qui délivre au moins une partie de signal (OUT1, OUT2), au moins un photodétecteur (PD11, PD21) par partie de signal (OUT1, OUT2), ce photodétecteur (PD11, PD21) produisant un signal détecté (ED1, ED2, ED1-ED2) dans lequel cette interférence (INT1, INT2) se manifeste, peut être amené.

25. Procédé selon la revendication 24,
**caractérisé en ce**
**qu'**un filtre (LED1, LED2, LED12, LED, LEDOMn avec n étant un entier) laisse passer au moins un signal spectral partiel (FIO1, FIO2, FIO12, FIOOMn avec n étant un entier) d'au moins un signal traitable (EDV1, EDV2, EDV12, EDW1, EDW2, EDW12) qui est produit à partir du signal détecté (ED1, ED2, ED1-ED2).

26. Procédé selon la revendication 24 ou 25,
**caractérisé en ce**
**que** le signal de réglage côté entrée (L1, L2, L12, LW1, LW2, LW12) est amené au moins en partie à un détecteur (DET1, DET2, DET12, DET, DETOMn, DETOMmn avec m, n étant des entiers), lequel réalise le signal de réglage côté entrée (L1, L2, L12, LW1, LW2, LW12) de manière telle qu'il est au moins approximativement une fonction (F), qui est de préférence une fonction linéaire ou une fonction de racine, d'au moins un moment de deuxième ordre (SOM2, SOM4, SOM3, SOM1, SOM12, SOMn, SOMmn avec m, n étant des entiers) d'au moins un signal spectral partiel (FIO1, FIO2, FIO12, FIOOMn avec n étant un entier).

27. Procédé selon la revendication 26,
**caractérisé en ce**
**qu'**un moment de deuxième ordre (SOM12, SOMmn avec m, n étant des entiers), réalisé mixte, est produit par le détecteur (DET, DETOM12, DETOMmn avec m, n étant des entiers) à partir de deux signaux spectraux partiels (FIO1, FIO2, FIO12, FIOOMn avec n étant un entier) différents.

28. Procédé selon la revendication 26 ou 27,
**caractérisé en ce**
**qu'**un moment de deuxième ordre (SOM2, SOM4, SOM3, SOM1, SOM12, SOMn, SOMmn avec m, n étant des entiers) d'une partie spectrale (FIO1, FIO2, FIO12, FIOOMn avec n étant un entier) est produit par le détecteur (DET1, DET2, DET12, DET, DETOMn) et devient une mesure de la puissance de la partie spectrale (FIO1, FIO2, FIO12, FIOOMn avec n étant un entier).

29. Procédé selon l'une des revendications 25 à 28,
**caractérisé en ce**
**qu'**un coefficient de Fourier de ce signal traitable (EDV1, EDV2, EDV12, EDW1, EDW2, EDW12) est constitué en tant que signal spectral partiel (FIO1, FIO2, FIO12, FIOOMn avec n étant un entier) de ce signal détecté (ED1, ED2, ED1-ED2), une compensation du temps de propagation étant effectuée avant la constitution de deuxièmes moments (SOM12, SOMmn avec m, n étant des entiers) réalisés mixtes.

30. Procédé selon l'une des revendications 25 à 29,
**caractérisé en ce**
**qu'**un signal traitable (EDV1, EDV2, EDV12) réalisé en tant que signal détecté (ED1, ED2, ED1-ED2) est traité dans le module de traitement de signaux (DR), lequel délivre un signal de réglage côté sortie (ST1, ST2), lequel commande le transformateur de polarisation côté sortie (SPT, SPT1, SPT2).

31. Procédé selon l'une des revendications 25 à 29,
**caractérisé en ce**
**que** le signal détecté (ED1, ED2, ED1-ED2) est corrélé avec au moins une partie spectrale d'au moins un signal de sortie de données (DD1, DD2) par un élément corrélant (ME1, ME2, ME12) présent dans le module de traitement de signaux (DRW),
**qu'**un signal traitable (EDW1, EDW2, EDW12) réalisé en tant que signal de corrélation et produit lors de la corrélation est traité par le module de traitement de signaux (DRW),
un signal de réglage côté sortie (STW1, STW2), produit lors du traitement, commande le transformateur de polarisation côté entrée (PMDC, PMDC1, PMDC2).
